## Europäisches Patentamt

(19) **European Patent Office** (11) Numéro de publication: **0 063 071**

**Office européen des brevets** **B1**

(12) **FASCICULE DE BREVET EUROPEEN**

(45) Date de publication du fascicule du brevet: **19.06.85** (51) Int. Cl.⁴: **G 06 F 13/00**

(21) Numéro de dépôt: **82400560.7**

(22) Date de dépôt: **26.03.82**

(54) **Procédé et dispositif de transmission de données numériques.**

---

(30) Priorité: **08.04.81 FR 8107037**

(43) Date de publication de la demande:
**20.10.82 Bulletin 82/42**

(45) Mention de la délivrance du brevet:
**19.06.85 Bulletin 85/25**

(84) Etats contractants désignés:
**DE GB IT NL**

(56) Documents cités:
**FR-A-2 376 464**
**US-A-3 713 109**
**US-A-4 000 485**
**US-A-4 174 536**

**IEEE TRANSACTIONS ON NUCLEAR SCIENCE,
vol.NS-27, no.1, février 1980, IEEE, New York
(US) B. WADSWORTH: "A system overview of
fastbus", pages 612 à 621
COMPUTER DESIGN, vol.19, no.12, décembre
1980, Winchester, Mass. (US) G.R. SAMSEN et
al.: "Bus adapter simplifies interprocessor
communication", pages 119 à 124**

(73) Titulaire: **THOMSON-CSF
173, Boulevard Haussmann
F-75379 Paris Cedex 08 (FR)**

(72) Inventeur: **Ballegeer, Jean-Claude
THOMSON-CSF SCPI 173, bld Haussmann
F-75360 Paris Cedex 08 (FR)**
Inventeur: **Nguyen, Duyet Huu
THOMSON-CSF SCPI 173, bld Haussmann
F-75360 Paris Cedex 08 (FR)**

(74) Mandataire: **Lepercque, Jean et al
THOMSON-CSF SCPI 173, Bld Haussmann
F-75379 Paris Cedex 08 (FR)**

(56) Documents cités:
**MICROPROCESSORS AND MICROSYSTEMS,
vol.3, no.9, novembre 1979, IPC Business Press,
Londres (GB) A. CLEMENTS: "Computer
system buses", pages 413-420
Fall Joint Computer Conference, 1972, pages
719 à 732**

---

Courier Press, Leamington Spa, England.

EP 0 063 071 B1

## Description

La présente invention concerne un procédé et un dispositif de transmission de données sous forme numérique pour un système comportant des unités de traitement de données autonomes, pouvant émettre et/ou recevoir les données selon les préambules des revendications 1 et 10.

Dans le cadre de l'invention, le terme "unité de traitement de données" doit être entendu dans son acceptation la plus générale. Lesdites unités peuvent être des processeurs ou des unités périphériques telles que des mémoires de masse, des imprimantes, des lecteurs de cartes, des unités de bandes magnétiques, des tambours magnétiques, etc. La transmission des données d'une unité à une ou plusieurs autres unités s'effectue par l'intermédiaire d'un réseau de fils électriques commun auquel sont reliées toutes les unités de traitement et désigné couramment "ligne omnibus" ou encore "bus" selon la terminologie anglo-saxonne. L'invention permet le dialogue entre processeurs ou entre un processeur et un ou des périphériques; ou encore entre des périphériques associés aux processeurs.

Par la suite, toutes les unités de traitement de données capables d'émettre et/ou de recevoir des données numériques seront appelées plus simplement "unités".

Le procédé de l'invention doit satisfaire simultanément à de nombreux critères. Il doit, par exemple, permettre le travail en parallèle d'unités spécialisées ou accommoder entre elles des unités de technologie et/ou de familles différentes, en particulier ayant des cycles de travail différents les uns des autres. Un autre condition importante à satisfaire est l'adaptation harmonieuse de chaque unité à la charge globale de travail du système, tenant compte également de particularités locales. Ce procédé doit aussi permettre un changement de la configuration du système, par exemple son extensibilité, sand nécessiter de transformations importantes.

Enfin, il est également très important que la fiabilité du système soit maximale. Le fonctionnement défectueux de l'une des unités ne doit pas influencer le fonctionnement des autres unités et notamment interdire l'accès à une ressource commune lorsque ces unités sont en compétition avec l'unité défectueuse. De façon plus générale, le fonctionnement du système doit être sûr et tous les blocages doivent être évités.

Dans tous ces systèmes se posent de nombreux problèmes d'interactions entre les diverses unités. Notamment, lorsque deux unités ou plus sont en compétition pour avoir accès à une même ressource, ce type de conflit doit être résolu de façon optimale. Dans le cadre spécifique de l'invention, cette ressource est le bus commun.

Dans de nombreuses applications le besoin se fait donc sentir de mettre en oeuvre un procédé d'allocation de ressources souple et performant, et ceci constitue un premier besoin à satisfaire. De nombreux procédés d'allocation de ressources sont connus. Ces procédés incorporent le plus souvent des procédures d'attribution d'un niveau de priorité aux unités en compétition.

Les premiers procédés connus permettaient une allocation des ressources en fonction de priorités réparties selon un schéma hiérarchique fixe ou encore selon une répartition temporelle cyclique, sous la commande de moyens entièrement centralisés.

Dans le cadre des systèmes informatiques comportant des moyens de liaison entre les unités du type bus, des procédés d'allocation de ressources plus souples que ceux précédemment évoqués ont été proposés. Ces procédés mettent en jeu des procédures d'attribution dynamique de priorité ou encore des procédures d'échange d'une séquence de messages du type "demande-validation et/ou acceptation", procédures plus connues sous la dénomination anglo-saxonne "hand-shake". Des procédés de ce type sont décrits dans les demandes de brevet français publiées sous les N° FR—A—2 179 031 et FR—A—2 376 464. Bien qu'introduisant un plus grand degré de décentralisation dans la prise de décision d'allocation du bus, il est encore nécessaire selon ces procédés, de disposer d'un organe centralisé pour assurer un bon déroulement des procédures, que ce soit l'un des processeurs connectés au bus ou une unité spécialisée connue sous différentes dénominations telles que "moniteur de bus" ou "arbitre de bus".

Il est également connu de l'article de WADSWORTH paru dans "IEEE TRANSACTIONS ON NUCLEAR SCIENCE"; vol. 27, n° 1 février 1980, pages 612—621 un système modulaire à bus permettant des procédures différenciées d'adressages d'unités du type "maître" et "esclave", notamment l'adressage point à point et l'adressage de type diffusion ("BROADCAST"). L'adresse de type diffusion est indiquée par un signal NH et il y a un signal AS indiquant la présence d'une adresse. Cependant ce système utilise des interconnexions du type connu sous la dénomination anglo-saxonne "DAISY-CHAIN" entre des segments.

Pour satisfaire plus complètement le besoin évoqué, et obvier aux inconvénients de l'art connu, on peut mettre en oeuvre un procédé d'allocation de ressources entièrement décentralisé, objet d'une demande Européenne parallèle, publiée sous le N° 63 972.

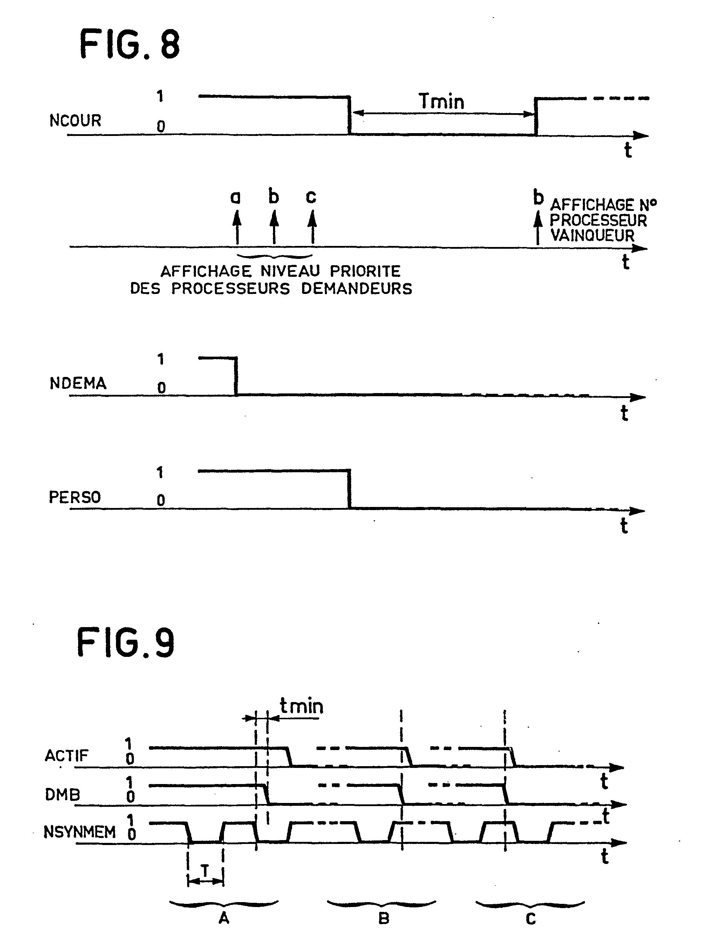

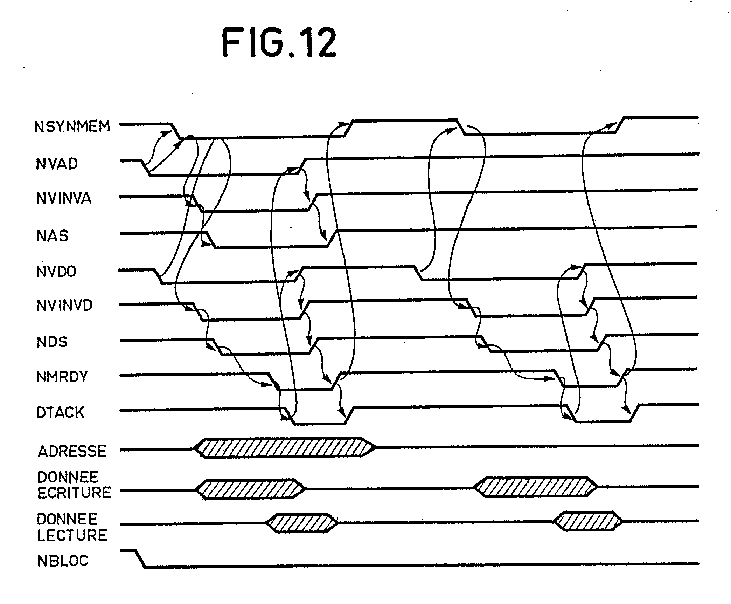

Il est également connu des systèmes de résolution de priorités décentralisés. L'article de synthèse de KENNETH et al: "A systematic approach to the design of digital bussing structures", paru dans "Fall Joint Computer Conference 1972"; pages 719—740, décrit parmi d'autres possibilités, une variante de la méthode du type connus sous la dénomination anglo-saxonne de "decentralized version of independent requests" (cf Fig. 12), dérivée de la méthode "independent requests using a centralized bus control" selon la page 723 (Fig. 9).

Selon la méthode décrite, il est utilisé un fasceau de lignes ("BUS REQUESTS"), chaque ligne étant associée à un niveau de priorité. Lorsqu'une unité désire l'utilisation du bus de transmission commun aux unités, l'unité positionne un signal particulier sur la ligne qui correspond à son niveau de priorité.

Il est également utilisé un signal commun aux unités ("BUS ASSIGNED") indiquant qu'une des unités est active. Lors de la retombée de ce signal, les unités demanderesses de l'allocation du bus scrutent sous les conducteurs dudit faisceau pour déterminer la demande présentant la plus haute priorité.

Selon le procédé d'allocation, objet de la demande européenne précitée, chaque unité de traitement de donnée d'un système est associée à un circuit d'interface d'allocation de ressource standard et ces circuits d'interface sont couplés entre eux à l'aide d'un bus véhiculant un premier signal binaire indiquant qu'au moins une unité demande l'accès à une ressource, un deuxième signal binaire indiquant qu'aucune unité n'utilise cette ressource et un troisième signal binaire d'une durée déterminée autorisant le départ de la compétition entre unités demanderesses et l'allocation de la ressource à une unité gagnante, un premier mot binaire indiquant le plus haut niveau de priorité et un second mot binaire indiquant le numéro de l'unité gagnante.

En outre ce procédé permet de minimiser les pertes de temps au moment de l'attribution initiale d'une ressource ou du changement d'affectation de cette ressource.

Ce procédé d'allocation d'une ressource sera ultérieurement rappelé de façon plus détaillé car il s'applique de façon particulièrement avantageuse aux systèmes incorporant les enseignements de la présente invention.

Celle-ci concerne plus spécifiquement la gestion des échanges de données numériques entre les unités une fois que l'allocation du bus a été attribuée à l'une des unités et à un dispositif pour la mise en oeuvre du procédé.

Il est en effet nécessaire, pour cette tâche spécifique de mettre en oeuvre des procédés également souples et performants, de manière à ne pas compromettre les gains en souplesse et efficacité obtenus par la mise en oeuvre du procédé d'allocation précité.

Ceci constitue un second besoin, que vise a résoudre la présente invention.

La présente invention, telle qu'elle est caractérisée, a pour but d'assurer un adressage différencié et fiable en minimisant les pertes de temps au moment de l'attribution initiale d'une ressource ou du changement d'affectation de cette ressource dans un système de traitement de données avec un canal unique de transmission de données de bus à liaisons multiples entre des unités de type maître ou esclave et dans un système dans lequel toutes les unités de type maître peuvent acquérir la maîtrise du canal unique.

Dans le cadre de celle-ci, les unités composant le système peuvent être de deux types principaux: des unités "maîtres" et des unités "esclaves". Il faut entendre par là que les unités "maîtres", indifféremment processeurs ou périphériques, peuvent se voir attribuer à tour de rôle la maîtrise instantanée du bus de liaison commun par le procédé d'allocation de ressource précité et selon des procédures entièrement décentralisées; l'initiative de demande de la maîtrise du bus ayant été prise par au moins l'unité à laquelle la maîtrise a été attribuée éventuellement par d'autres unités de type "maître" qui étaient un compétition avec l'unité gagnante. Les unités "esclaves" n'ont pas la possibilité d'obtenir la maîtrise du bus.

Le procédé de l'invention permet des transferts selon trois modes différents de structure d'adressage par la mise en oeuvre de signaux de service:

— transfert maître à esclave;
— transfert maître à maître;
— transfert maître à d'autres unités en diffusion générale ou "broadcast" selon la terminologie anglo-saxonne.

L'utilisation de deux signaux différents, pour distinguer entre un adressage de type maître à esclave et maître à maître, permet une plus grande vitesse d'exécution et une meilleure fiabilité, car il ne peut y avoir interférence de ces deux signaux.

L'invention a donc pour objet un procédé de transmission de données numériques entre des unités d'un système de traitement de ces données par un canal unique de transmission de données de type bus à liaisons multiples auquel sont connectées par l'intermédiaire de circuits d'interface toutes les unités constituant ledit système, le système comprenant des unités de type maître pouvant demander et acquérir la maîtrise instantanée du canal de transmission pour adresser au moins une autre unité dudit système et initier des échanges de données sur ce canal, et des unités de type esclave pouvant être adressées par une unité de type maître ainsi qu'un dispositif d'allocation de la maîtrise instantanée dudit canal à une des unités du type maître demanderesse de la maîtrise instantanée de ce canal. Le dispositif d'allocation est en connexion avec toutes les unités de type maître. Ce procédé est caractérisé en ce que la transmission de données sur le canal unique s'effectue, au choix, selon trois structures d'adressage différenciées, chacune étant exclusive des deux autres et étant initiée par l'émission sur un bus élémentaire dudit canal unique de transmission de données, par les circuits d'interface associée à l'unité de type maître ayant acquis la maîtrise instantanée du canal de transmission, d'au moins un signal de commande particulier de type binaire, pouvant prendre des premier et second états logiques, transmis par ledit canal unique simultanément à tous les autres circuits d'interface et choisi parmi les trois signaux suivants:

— un premier signal de commande qui est positionné au premier état logique en présence d'une adresse de destination de type esclave stable et initie un transfert de données point à point entre l'unité de type maître ayant acquis la maîtrise instantanée du canal de transmission et une unité de type esclave adressée par cette unité de type maître;

— un deuxième signal de commande qui est positionné au premier état logique en présence d'une adresse de destination de type maître stable et initie un transfert de données point à point entre l'unité de type maître ayant acquis la maîtrise instantanée du canal de transmission et une seconde unité de type maître adressée par la première unité de type maître;

— et un troisième signal de commande dont le positionnement au second état logique conjointement au positionnement au même état du premier ou du deuxième signal de commande initie un transfert de données en diffusion générale entre l'unité de type maître ayant acquis la maîtrise instantanée du canal de transmission et au moins toutes les autres unités de type maître dudit système, toutes ces unités étant sélectionnées simultanément, ce troisième signal de commande interdisant de prendre en compte une adresse particulière.

L'invention a encore pour objet un dispositif de mise en oeuvre de ce procédé tel que défini par la revendication 11.

L'invention sera mieux comprise et d'autres avantages apparaîtront à l'aide de la description qui suit, en référence aux figures annexées:

— la figure 1 représente schématiquement l'architecture d'un système de traitement de données dans le cadre de laquelle l'invention trouve son application;
— la figure 2 représente de façon plus détaillée la configuration du bus commun d'échange de données utilisé dans ce système;
— les figures 3 et 4 représentent schématiquement des détails du dispositif d'allocation de ressource pouvant être utilisé dans ce système;
— les figures 5 et 6 représentent de façon plus détaillée deux types d'interfaces d'échanges des données reliés au bus commun;
— la figure 7 illustre une variante particulière du dispositif de l'invention;
— les figures 8 et 9 sont des diagrammes illustrant le fonctionnement du dispositif d'allocation de ressource;
— la figure 10 est un organigramme résumant les différentes étapes de l'allocation de resource;
— les figures 11 à 15 sont des diagrammes illustrant plusieurs modes de fonctionnement du dispositif selon l'invention;
— les figures 16A à 16C sont relatives à un organigramme résumant les différents modes de fonctionnement du dispositif selon l'invention.

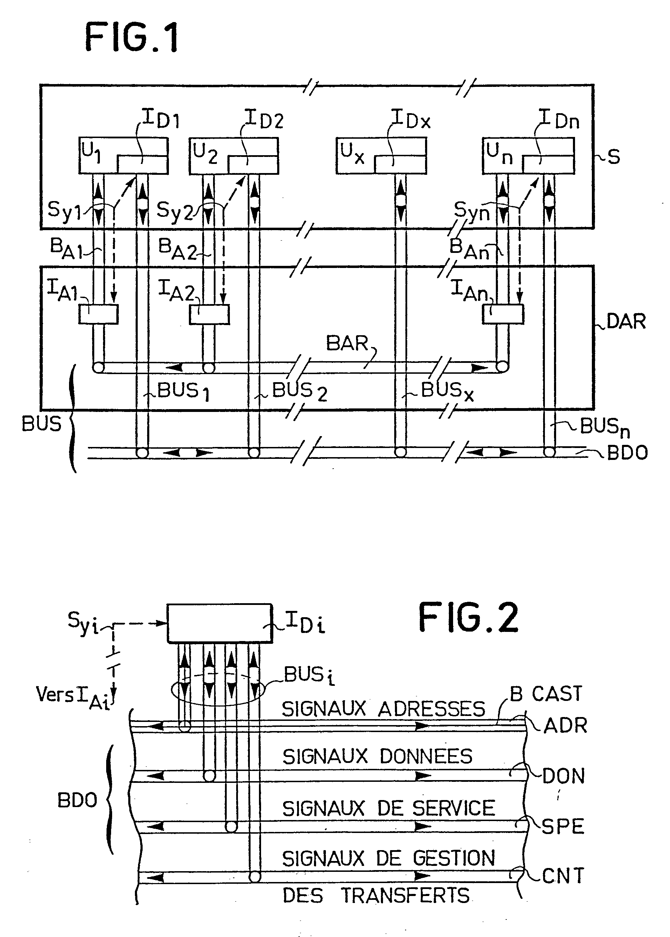

Sur la figure 1, est représenté schématiquement une architecture de système S dans le cadre de laquelle l'invention trouve son application. Le système comporte plusieurs unités autonomes de traitement de données $U_1$ à $U_n$. Ces unités peuvent être de tous types: processeurs ou unités périphériques. Ces unités sont de deux natures comme il a été antérieurement rappelé: des unités "maîtres" $U_1$, $U_2$, $U_n$ et des unités "esclaves" dont une seule, $U_x$, a été représentée sur la figure 1.

Toutes ces unités sont reliées à un canal d'échange de données du type bus: "BUS". Dans cette approche, en canal constituant la ressource à allouer, pour laquelle les unités sont en compétition.

Outre le dispositif d'allocation de ressource "DAR" qui a été évoqué et qui comprend son propre bus "BAR", le système S comporte un canal de liaison "BDO" pour l'échange de données, cet échange étant du type bidirectionnel. De manière habituelle, ce canal peut comprendre comme illustrée plus en détail sur la figure 2, un bus véhiculant des mots d'adresses "ADR", par exemple des mots de trente deux bits, un bus véhiculant des mots de données "DON", par exemple des mots également de trente deux bits divisibles en octets et un bus véhiculant des signaux de services "SPE". Ces derniers comprennent généralement des signaux permettant des échanges sûrs tels que signaux d'horloges, de synchro nisation etc. Ce bus peut également comprendre des liaisons de masse et des liaisons véhiculant les tensions nécessaires au fonctionnement des différentes unités qui lui sont connectées, selon la nature des technologies mises en oeuvre.

Enfin il comporte un quatrième bus "CNT" qui véhicule des signaux de commande et de gestion des transferts conformément à un des aspects les plus importants de l'invention.

Les unités $U_1$ à $U_n$ peuvent communiquer avec le canal "BDO" à l'aide de bus particuliers "$BUS_1$" à "$BUS_n$" via des circuits d'interfaces $I_{D1}$ à $I_{Dn}$. Ces circuits ont pour rôle d'effectuer toutes les adaptations nécessaires permettant de connecter une unité particulière $U_i$ au canal "BDO", adaptations, comme il est connu, de nature technologique ou logicielle.

Bien que sortant du cadre de la présente invention, il est nécessaire de rappeler avec précision la procédure d'allocation de ressource sus-mentionnée, car elle est nécessaire à la compréhension de la présente invention. Dans le cas présent il s'agit plus spécifiquement du procédé d'allocation du bus "BDO" a une unité de type maître, demanderesse de cette allocation.

Pour ce faire, le système S comporte un dispositif d'allocation de ressource "DAR" comprenant un bus spécifique "BAR" auquel sont reliées toutes les unités de type maître.

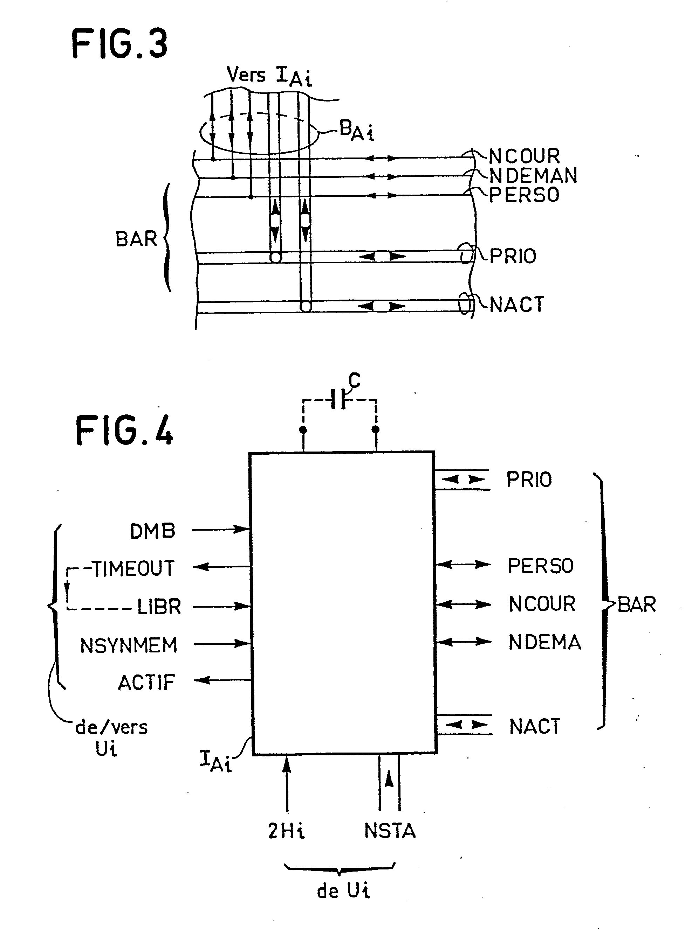

Pour résoudre les conflits d'accès, le dispositif d'allocation de ressources "DAR" comprend des circuits d'interfaces $I_{A1}$ à $I_{An}$ et un canal de liaisons multiples, "BAR", de couplage entre les moyens d'interface, du type bus. Ce bus est décrit de façon plus détaillée en relation avec la figure 3. Les unités de type maître $U_1$ à $U_n$ du système S sont couplées par un bus particulier $B_{A1}$ à $B_{An}$, chacune à un circuit d'interface $I_{A1}$ à $I_{An}$ qui lui est associé et qui sera appelé dans ce qui suit plus brièvement "interface".

Selon une caractéristique importante, tous les circuits d'interfaces $I_{A1}$ à $I_{An}$ sont identiques, c'est à dire banalisés et le procédé d'allocation de ressources permet une décentralisation complète des décisions d'allocation.

Pour ce faire, il est utilisé un jeu de trois signaux fondamentaux:

— un signal indiquant qu'il y a au moins une unité demandant à utiliser la ressource commune, c'est à dire le bus "BDO". Dans ce qui suit ce signal sera appelé "NDEMAN";
— un signal signalant que cette ressource n'est sous le contrôle d'aucune unité, appelé "PERSO";
— et un signal "NCOUR" d'une durée déterminée lançant la procédure d'attribution de la ressource à une des unités dite gagnante et figeant toutes autres demandes pendant la durée déterminée.

De préférence, ces signaux sont de type binaire et peuvent donc prendre deux états: "0" ou "1" logiques.

D'autre part, il est affecté à chaque unité un numéro ou adresse et un niveau de priorité. Cette affectation peut s'effectuer par toutes procédures de l'art connu, de préférence de façon dynamique.

La procédure de prise de la maîtrise d'une ressource se décompose en deux sous-procédures:

— l'arbitrage entre plusieurs unités candidates à cette maîtrise;
— le transfert d'une unité à une autre de cette maîtrise après une période d'activité de l'unité qui en avait la maîtrise.

Selon une variante préférée de l'invention, l'affectation des niveaux de priorités s'effectue selon un schéma comportant une affectation dynamique de ces niveaux. Cette affectation peut s'effectuer à l'aide de données enregistrées dans une mémoire et de façon préférentielle dans une mémoire non volatile de type "P.R.O.M." (mémoire programmable à lecture seule). Le niveau de priorité sera calculé selon une variante préférée, à l'aide de la différence entre les numéros attribués à l'unité en activité et à l'unité demanderesse de la maîtrise de la ressource à allouer.

Le bus "BDO" est attribuée à une unité dite gagnante à l'issue d'une "course" entre les unités en compétition au cours de laquelle cette unité gagnante aura affichée la plus forte priorité.

Une course est déclenchée dès que les trois conditions suivantes sont réunies:

— "NDEMAN" actif (niveau bas au "0" logique) signalant qu'au moins une unité $U_i$ demande le contrôle du bus "BDO";
— "PERSO" actif (niveau haut) signalant qu'il n'y a pas de course en train de se dérouler.

L'indice i est un nombre entier compris entre 1 et m, m représentant le nombre d'unités de type maître pouvant avoir accès au bus "BDO".

Le diagramme de la figure 8 illustre le cas où trois processeurs de données a, b et ce désirent acquérir la maîtrise du bus "BDO".

Le départ de la course est donnée par la descente du signal "NCOUR" comme indiqué à la première ligne du diagramme de la figure 8, provoquée simultanément par les interfaces qui en ont, les premières, détectées les conditions de déclenchement. Pour chaque unité une nouvelle priorité a été calculée avant le front descendant du signal "NCOUR". Cette priorité n'est affichée que par les unités (a, b, c) ayant positionné une demande de bus. Après la durée de propagation nécessaire des signaux, l'unité (b) ayant présentée la plus forte priorité se voit attribuer le bus. Cela a également pour effect de ramener le signal "PERSO" au niveau bas ("0" logique) et d'interdire aussi toute nouvelle course.

Dans le cadre du système informatique de la figure 1, chaque unité de traitement de donnée $U_n$ peut avoir un cycle de travail de base qui lui est propre. Lorsque les unités sont de technologies et/ou de familles différentes, ces temps de cycles sont différents les uns des autres. Ces temps sont définis par une horloge interne ou par des signaux d'horloge dérivés d'une horloge centralisée.

Après un temps $T_{min}$ déterminé par la plus lente des horloges des unités qui ont déclenché la course, le signal "NCOUR" est relevé et l'unité (b) gagnante affiche son numéro et signale le début de l'utilisation de la ressource par cette unité.

La figure 3 représente de façon plus détaillée le bus "BAR" reliant les circuits d'interfaces $I_{A1}$ à $I_{An}$. Il comprend trois fils de liaisons bidirectionnelles véhiculant les signaux "NCOUR, NDEMAN et PERSO". Par convention, la lettre "N" comme première lettre dans les sigles repérant les signaux utilisés par la présente invention signifie que ces signaux sont actifs à l'état bas ou "0" logique. Par ailleurs, ces signaux et leurs significations sont rappelés dans le Tableau I placé en fin de la présente description.

Le bus "BAR" comprend d'autre part un canal à liaisons bidirectionnelles multiples "PRIO" véhiculant un mot binaire affichant le niveau de la plus haute priorité calculée par les interfaces $I_{A1}$ à $I_{An}$. Dans un exemple de réalisation particulière ce canal peut comprendre huit fils de liaison, véhiculant chacun un bit, le mot de priorité étant composé d'un octet.

Le bus "BAR" comprend en outre un canal, également à liaisons bidirectionnelles multiples "NACT", comprenant par exemple quatre fils pour véhiculer un mot binaire de quatre bits représentant le numéro du processeur vainqueur ("b" dans l'exemple choisi) ou plus généralement de l'unité gagnante $U_i$.

Dans ce qui précède, il a été décrit le procédé d'allocation de ressource dans sa variante principale. Il est encore possible d'améliorer ce procédé par deux mesures particulières qui vont maintenant être rappelées: le lancement anticipé de la "course", c'est à dire essentiellement du signal "NCOUR" et l'activation anticipée de cette "course".

En ce qui concerne le lancement anticipé de la course, partant d'un état du système où le bus "BDO" n'est pas actif, c'est à dire non alloué, la procédure de prise de contrôle de ce bus décrite dans ce qui précède ne permet pas de connaitre les moments exacts de début et de fin d'une course. Tout au plus, chaque unité candidate sait-elle à quel moment elle-même déclenchera la course. De plus, dès la fin d'une course il devient possible qu'une nouvelle unité soit immédiatement validée. De là, une unité active qui désire quitter la ressource ne devrait autoriser une course, en relevant le signal "PERSO", qu'une fois terminé son dernier cycle. Or, si elle se trouve être candidate et gagnante de la nouvelle course, elle aura ainsi attendu inutilement un cycle avant de reprendre la ressource quittée. De plus, si le fonctionnement au niveau de la ressource est tel que chaque unité est active pendant une durée déterminée constante, il y a alors perte de temps dûe à l'élection du prochain vainqueur. Ces temps d'inactivité sont inacceptables. Il est souhaitable de pouvoir lancer une course en parallèle avec le dernier cycle de l'unité active, et de telle sorte que cette course se termine en même temps que ce cycle. Pour cela, l'unité active lance seule la course si, au cours de son dernier cycle elle aura détecté la présence d'une demande d'allocation du bus "BDO". Il lui suffit de tester la liaison véhiculant le signal "NDEMAN" sans relever le signal "PERSO". Si aucune demande n'est en vue avant le front montant de son horloge défini sur son temps de cycle, elle relève le signal "PERSO" sur la fin du cycle pour quitter le bus "BDO" et le cas normal décrit précédemment se repète. En libérant ainsi le bus "BDO" sans avoir déclenché de course la dernière unité active y laisse cependant son numéro actif qui continuera à servir au calcul d'une nouvelle distribution de priorités pour la prochaine course.

En ce qui concerne la seconde mesure, le lancement anticipé de "NCOUR" provient de souci de prendre en compte et de satisfaire le plus rapidement possible une demande de bus, c'est à dire en pratique une demande de lancement de course, si la demande est présentée suffisamment tôt. Dans le même ordre d'idée, il est souhaitable que la validation d'une unité gagnante puisse aussi se faire au plus tôt. On risque en effet une perte de temps dûe à l'attente de la fin de la course pour la resynchronisation du vainqueur sur son horloge particulière.

On cherche donc, quand cela est possible, à valider l'unité gagnante sans attendre la fin de la course. Dans le cas où la dernière unité active est

à nouveau demanderesse, elle peut, dès que sa course est terminée repasser en mode actif si elle est gagnante. Sachant qu'il n'existe qu'une seule unité gagnante à la fois, la validation anticipée ne nuit pas au bon fonctionnement du système.

Si l'unité gagnante est seule demanderesse dans le système S, elle ne mettra qu'un cycle d'horloge pour reprendre la ressource après une période d'inactivité.

Une fois l'unité périphérique ou le processeur vainqueur déterminé par le procédé d'allocation de ressource qui vient d'être décrit, cette unité périphérique ou ce processeur prend la maitrise du bus "BDO", et peut utiliser ce bus pour échanger des données avec une ou plusieurs autres unités, par exemple selon une procédure du type: "adressage d'une unité particulière suivi de l'échange proprement dit", conforme à la présente invention et qui va être décrite dans ce qui suit.

Pour éviter une monopolisation du canal d'échange de données par une unité particulière, on peut allouer de façon personnalisée un temps maximum au bout duquel la ressource, c'est à dire le bus "BDO", doit être remise en compétition et attribuée à nouveau selon le procédé de l'invention. Pour ce faire, les horloges de chaque unité peuvent ête utilisées en association avec une base de temps.

La figure 4 décrit schématiquement un circuit d'interface $I_{Ai}$. Il est supposé tout d'abord que chaque unité $U_i$ est munie d'une horloge, d'une fréquence déterminée délivrant des signaux d'horloge $H_i$. Ces circuits se présentent sous la forme d'un module $I_{Ai}$ qui s'interconnecte entre le bus "BAR" et l'unité associée $U_i$. Il reçoit des signaux d'horloge "$2H_i$" de fréquence double de celle de l'unité $U_i$, ces signaux d'horloge étant synchronisées l'un par rapport à l'autre. C'est cette horloge qui détermine le temps minimum de la course déclenchée par cet interface $I_{Ai}$. Sa période doit être supérieure ou égale à un temps minimum pour assurer un bon fonctionnement de l'ensemble, ce temps dépendant de la technologie utilisée.

Cinq signaux sont nécessaires pour relier l'interface à l'unité associée.

L'interface $I_{Ai}$ est averti que l'unité $U_i$ est demanderesse du bus "BDO" d'échange de données par le signal "DMB".

Lorsque l'unité $U_i$ est élue, l'interface $I_{Ai}$ renvoie le signal "ACTIF" indiquant que le bus "BDO" est disponible et que les transferts de données peuvent commencer. Un signal "NSYNMEM" permet de synchroniser l'interface $I_{Ai}$ avec l'interface d'échange de données $I_{Di}$ également associée à l'unité $U_i$. Cet interface est un des éléments essentiel de l'invention et sera décrit en détail dans ce qui suit. Ce signal est l'un des signaux représentés sur la figure 2 par la référence $S_{yi}$. Le signal "NSYNMEM" représenté sur la dernière ligne du diagramme de la figure 9, actif au niveau bas ou "0" logique selon la convention évoquée précédemment, est un signal périodique de durée T au niveau actif, durée égale au temps nécessaire à un transfert de donnée sur le bus "BDO". Il n'interfère avec le fonctionnement de l'interface I$_{AI}$ qu'au moment du dernier transfert de données effectuées.

Lorsque l'unité U$_i$ libère le bus "BDO", elle à la possibilité d'indiquer quand va s'effectuer le dernier transfert. Pour cela, il suffit qu'elle fasse retomber le signal "DMB" alors que le signal "NSYNMEM" est encore actif. Ceci est représenté sur le diagramme de la figure 9, partie A.

Si "DMB" retombe lorsque "NSYMEM" est inactif, l'interface I$_{AI}$ considère qu'il n'y aura plus de transferts. Ceci est représenté sur le diagramme de la figure 9, partie B.

Cette condition permet de réaliser le lancement anticipé de course qui a été évoqué précédemment. Pour améliorer les performances, il est préférable d'utiliser cette fonction, auquel cas il fait s'assurer que le signal "DMB" est lié correctement au signal "NSYNMEM".

Dans le cas général, la détermination du dernier transfert est sous la responsabilité de l'unité U$_i$ en activité.

La partie C du diagramme de la figure 9 représente le cas où un fonctionnement défectueux est apparu: le signal "ACTIF" est retombé avant le dernier transfert à réaliser.

Un signal "TIMEOUT" règle le temps maximum associé à l'unité U$_i$ pour la maitrise du bus "BDO". Ce temps est déterminé à l'aide d'un condensateur C, par exemple, d'une valeur déterminée agissant sur un monostable. Toute autre méthode peut être mise en oeuvre, par exemple une méthode purement numérique utilisant des compteurs binaires à capacité modifiable ou associés à une logique de sélection d'un état particulier.

Le signal "TIMEOUT" permet de répartir les accès au bus "BDO". Il peut être défini deux modes d'utilisation fondamentaux:

— le temps défini par le signal "TIMEOUT" a une valeur faible, par exemple de l'ordre de quelques microsecondes. Il permet alors à l'unité U$_i$ de réaliser un à deux transferts de données sur le canal "BUS" durant une activation de cette unité, et de relacher le canal "BUS" dès qu'il y a un autre demandeur. Dans ce cas chaque unité U$_i$ accède au canal "BUS" souvent, mais pour peu de temps;

— le temps défini par le signal "TIMEOUT" est fixé de telle sorte qu'il soit de l'ordre de grandeur de la durée moyenne des accès au canal "BUS" par l'unité U$_i$. Dans ce cas, l'unité U$_i$ réalise en séquence une activité sur le canal "BUS". Les temps morts sont également exploités.

En réponse au signal "TIMEOUT", l'unité renvoie un signal "LIBR" libérant l'interface.

Enfin l'interface reçoit sur le canal "NSTA" un mot binaire représentant le numéro attribué à l'unité U$_i$.

La procédure d'allocation du bus "BDO" peut se résumer comme suit:

Une course est lancée à chaque fois qu'une ou plusieurs unités (U$_1$ à U$_n$) désirent accéder au canal "BUS" et en obtenir la maîtrise. La course permet de "geler" les demandes en vue d'élire l'unité la plus prioritaire.

Une course est lancée dans les cas suivants:

.. Aucune unité de type maître n'occupe le bus "BDO". Chaque unité déclenche sa propre course.

.. Une unité U$_i$ de type maître est active sur le bus "BDO" et en a la maitrise. Cette unité déclenche une course au cours de son dernier transfert (signal "NSYNMEM").

.. L'unité de type maître active U$_i$ a épuisé le temps qui lui est imparti ("TIMEOUT").

.. Une course est déclenchée si l'unité de type maître qui a la maîtrise du bus "BDO" retire sa demande (identique au cas précédent) ou si son interface reçoit l'ordre de libération ("LIBR"). Dans ce cas l'unité U$_i$ participe à la nouvelle course, si elle n'a pas retiré sa demande.

Les signaux "LIBR" et "DMB" sont élaborés par l'unité U$_i$ de type maître associé à un interface donné I$_{AI}$.

La synchronisation de la course s'effectue de la façon suivante:

Lorsque qu'aucune unité de type maître n'a la maîtrise du canal "BUS" (signal "PERSO" à l'état haut), la course est synchronisée sur les signaux d'horloge "2H$_i$" de l'unité. Elle dure une période d'horloge ("2H$_i$").

Dans l'autre cas, une unité de type maître est active, la course commence sur le premier front du signal d'horloge "2H$_i$" après la retombée du signal "DMB". Elle se termine sur la fin du dernier transfert si une période d'horloge s'est dèjà écoulée. La durée minimum d'une course est donc égale à une période de l'horloge.

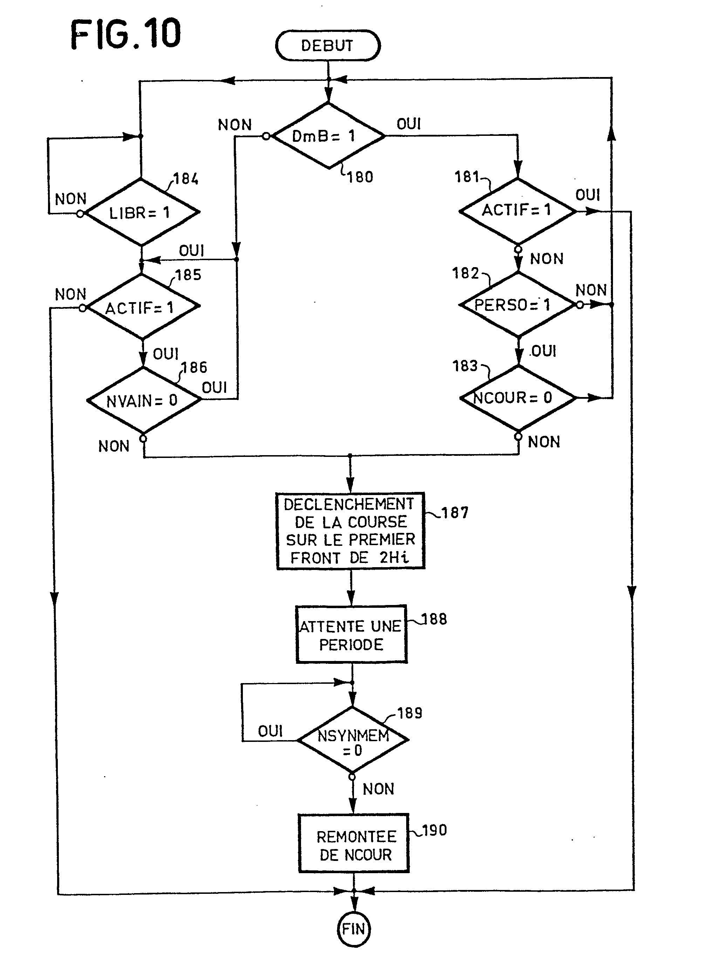

Le lancement d'une course (retombée du signal "NCOUR") suit une séquence bien déterminée qui est illustrée par le diagramme de la figure 10.

Lorsqu'une demande de maîtrise du bus "BDO" se présente (en 180: signal "DMB"=1) et que l'unité n'est pas active (en 181: signal "ACTIF"=0), les conditions de déclenchement d'une course (en 187) sont les suivantes: aucune unité n'a la maîtrise du bus "BDO" (en 182: signal "PERSO"=1) et aucune autre course n'est lancée (en 183: signal "NCOUR"=0). Dans ce cas après une période de signaux d'horloge "2H$_i$" (en 188), le signal "NCOUR" est remis à l'état haut pour assurer l'élection de l'unité gagnante. Dans ce cas le signal "NSYNMEM" est à l'état haut (inactif) puisqu'aucune unité n'a été activée.

Lorsque le signal de demande de maîtrise du bus "BDO" retombe (en 180) ou que l'interface I$_{AI}$ reçoit un ordre de libération (en 184: signal "LIBR"=1) et que l'unité est active (maitrise du bus "BDO"), une course est déclenchée si le signal "NDEMAN" est actif (en 186: signal "NDEMAN"=1), c'est à dire qu'une unité demande la maîtrise du bus "BDO". La remontée

du signal de course "NCOUR" (en 190) s'effectue en synchronisme avec la fin du dernier transfert (en 189: signal "NSYNMEM"=0, branche NON).

Ces rappels, nécessaires à la bonne compréhension de l'invention étant effectués, la partie du système informatique S concernant le dispositif de transmission de données numériques conformes au procédé de l'invention va maintenant être décrit de façon détaillée. L'objet de l'invention est de proposer un procédé de gestion optimisé de ces échanges, plus spécifiquement dans le cadre d'un système informatique tel qu'il vient d'être décrit et notamment incorporant le dispositif d'allocation de ressources rappelé.

Comme il a déjà été décrit succinctement en relation avec la figure 2, un des éléments les plus importants du dispositif de transmission de données est le bus "BDO" auquel sont connectées via un interface $I_{DI}$ toutes les unités sans exception, qu'elles soient de type maître ou de type esclave. Il est à noter qu'une unité peut être alternativement maître ou esclave. Ce bus assure quatre fonctions qui sont remplies dans un exemple préféré de réalisation par les quatre bus élémentaires ADR, DON, SPE et CNT:

— fonction d'adressage (bus "ADR");
— fonction de transfert de données (bus "DON");
— function de gestion des transferts ("CNT");
— et fonction de service (bus "SPE").

Le bus ainsi constitué présente notamment les avantages suivants:

— il permet des interfaces ($I_{DI}$) standards, c'est à dire banalisés;
— il autorise une grande modularité;
— le nombre de lignes de chacun des bus élémentaires peut varier selon l'application particulière du système S;
— la gestion est totalement décentralisée et assure un haut degré de fiabilité.

Il doit être rappelé, qu'en général, les bus de liaisons constituent un des points faibles d'un système d'informatique lorsqu'on évalue la fiabilité de ces systèmes. La possibilité d'avoir un système totalement défaillant est fortement diminuée par une distribution décentralisée des organes de commande dans toutes les unités de type "maître" du système.

Un exemple de réalisation concrète va maintenant être décrit pour fixer les idées:

Le bus adresse "ADR" est un bus véhiculant des adresses dans une variante préférée, il comporte un faisceau de 32 conducteurs. Il est organisé de façon a pouvoir travailler en asynchronisme sur des mots de 16 ou 32 bits.

Le bus de données "DON" est un bus bidirectionnel d'échange de données comportant dans une variante préférée un faisceau de 32 conducteurs, utilisable pour des mots de 16 ou 32 bits. Les transferts peuvent s'effectuer en mots scindés en 8, 16, 24 ou 32 bits suivants l'état de signaux particuliers de commande.

Le bus de gestion des transferts "CNT" comportent un nombre déterminé de conducteurs véhiculant chacun un signal binaire de commande.

Selon une des caractéristiques principales de l'invention, ces signaux de commande autorise deux types de transfert principaux: "transfert Maître-Esclave" et "transfert Maître à Maître" selon plusieurs modes et variantes. Ces transferts utilisent les bus adresse "ADR" et donnée "DON".

Le premier type de transfert est initié par le positionnement à un des états binaires "0" par exemple d'un premier signal de commande: "NAS" indiquant que l'adresse de destination des données à transmettre par l'unité de type maître ayant acquis la maîtrise du bus "BDO" est stable. Outre ce signal, l'unité émettrice positionne un signal de commande d'écriture-lecture: "NRWGB", un signal de validation des données: "NDS" et un signal de validation d'écriture de chacun des octets possible du mot véhiculé par le bus "DON": "BYT 0, BYT 8, BYT 16 et BYT 24".

L'unité réceptrice, c'est à dire l'unité adressée doit positionner également des signaux sur le bus CNT: un signal acquittement d'adresse: "NAQAD", facultatif pour certains modes de transfert qui seront explicités dans ce qui suit, et un signal indiquant que la mémoire de l'unité réceptrice est prête: "NMRDY".

Les définitions de ces signaux, ainsi que des signaux qui vont être ultérieurement discutés sont rassemblées dans le Tableau II placé en fin de la présente description. La lettre N en première position indique, selon la convention précédemment retenue, que le signal est actif à l'état bas ou zéro logique.

Le second type de transfert est inité par le positionnement d'un autre signal de commande: "NSERV", jouant un rôle analogue au signal "NAS" dans le premier type de transfert. L'unité émettrice qui a la maitrise instantanée du bus doit également positionner le signal "NRWGB" et un signal de validation de donnée "NDSM" jouant le rôle analogue au signal "NDS".

Pour sa part l'unité de type maître adressée, réceptrice de données transférées, positionne les deux signaux d'acquittement précédemment évoqués: "NAQAD et NMRDY".

Enfin le bus "SPE" véhicule des signaux de services pour assurer des fonctions spécifiques, telle qu'initialisation du système par exemple et éventuellement comprend des liaisons d'alimentation électrique. Ces signaux sont bien connus de l'homme de métier et sortent du cadre de l'invention. Ils dépendant également de la technologie mise en oeuvre.

Les procédures et protocoles de transfert selon les deux types principaux vont maintenant être détaillés. Plusieurs modes et variantes sont permis par le procédé de gestion des transferts de l'invention.

Les transferts peuvent s'effectuer par blocs ou mots selon un mode simultané ou décalé. Il faut entendre par là que selon le premier mode l'adresse de destination est transmise en même temps que les données à transmettre. Enfin la transmision peut s'effectuer de "point à point", c'est à dire qu'une unité de type maître à qui le bus "BDO" a été alloué, transmet des données à une seule autre unité, maître ou esclave; ou au contraire en mode diffusion, c'est à dire que l'unité maîtresse du bus adresse simultanément l'ensemble des autres unités raccordées au bus.

Lorsqu'on effectue des transferts de données par mot, l'adresse est émise pendent la première partie du transfert et validée par le signal "NAS". L'unité réceptrice ainsi adressée doit se reconnaître et valider le signal "NAQAD" pour informer l'unité émettrice de cette reconnaissance. Le signal "NDS" émis en même temps (mode simultané) ou après (mode décalé) que le signal "NAS", valide le transfert des données. L'unité réceptrice doit répondre par le signal "NMRDY" dès qu'elle est capable d'émettre ou de recevoir des données. Le maître est responsable du signal de "NDS" qui ne doit remonter qu'après réception du signal "NMRDY".

Lorsqu'on effectue des transferts de données par bloc, un signal "NBLOC" transmis par le bus de gestion des transferts "CNT", valide ce type de transfert. Le transfert est initialisé de la même manière que pour un transfert mot, l'adresse validé par le signal "NAS" est l'adresse de départ du bloc. Chaque nouveau transfert de données validé par le signal "NDS" incrémente l'adresse sur l'ensemble des unités réceptrices.

Lorsque les transferts de données s'effectuent en mode "point à point", la validation du signal "NSERV" indique qu'une adresse est valide sur le bus adresse "ADR". Les quatre bits de poids faible indiquent le numéro de l'unité appelée. Cette unité valide le signal NAQAD indiquant qu'elle s'est reconnue.

Le signal "NDSM" peut apparaître en même temps que le signal "NSERV". L'unité appelée doit répondre par le signal "NMRDY" pour accepter les données transmises et terminer le transfert.

Les transferts peuvent également s'effectuer selon un mode dit "diffusion" ou "broadcast" selon la terminologie anglo-saxonne. Il est en effet utile dans certains cas de ne pas adresser spécialement une unité, mais de demander à l'ensemble des unités maîtres de prendre en compte une requête logicielle par exemple. Dans ce cas, la procédure est identique à l'échange en point à point, mais un bit de l'adresse ("BCAST") valide le mode diffusion. Auquel cas les unités ne tiennent pas compte de l'unité adressée. Dès qu'une unité peut effectuer la requête, elle acquittera la diffusion en positionnant un bit d'adresse ("AQBCAST"). Ceci a deux buts:

— avertir l'unité appelante que son appel a été enregistré;
— avertir les autres unités appelées que la requête sera satisfaite.

Le mode diffusion peut s'étendre aux transferts maître à toutes unités, de type maître ou de type esclave.

A ces procédures principales d'adressage et de transfert de données, peut s'ajouter une procédure particulière que permet l'invention selon une des variantes d'exécution: la procédure de substitution d'adresse. Cette procédure permet, par exemple, la réalisation d'un système de mémoire virtuelle par adjonction d'une unité spécialisée connectée via un interface de donnée au bus "BDO": un processeur gérant la table de correspondance des adresses, et offre plusieurs avantages en particulier lors de la mise au point du système: simulation d'interfaces, arrêt sur adresse bus système, etc.

Pendant un échange, cette unité spécialisée analyse les adresses transmises par le bus "ADR" et peut demander le contrôle du bus adresse "ADR" pour y substituer une nouvelle adresse par action d'un signal de commande "NSBAD". Après l'émission de l'adresse par une unité et la reconnaissance de celle-ci, le signal "NSBAD" est validé sur le bus "CNT" et invalide l'adresse précédemment émise afin de présenter une nouvelle adresse, dès lors le cycle se poursuit normalement.

Cette procédure permet de traiter directement des adresses virtuelles sur le bus et autorise de ce fait une plus grande modularité du système. En cas de changement de configuration du système S, seule cette unité spécialisée doit subir des modifications dans les tables de correspondance d'adresses qui lui sont associées.

Outre le bus de couplage des unités: "BDO" décrit précédemment, un des éléments les plus importants du dispositif de transmission de données selon l'invention est l'interface $I_{DI}$ dont sont munis toutes les unités raccordées au bus "BDO", et dont un exemple de réalisation concrète va maintenant être décrit de façon détaillée.

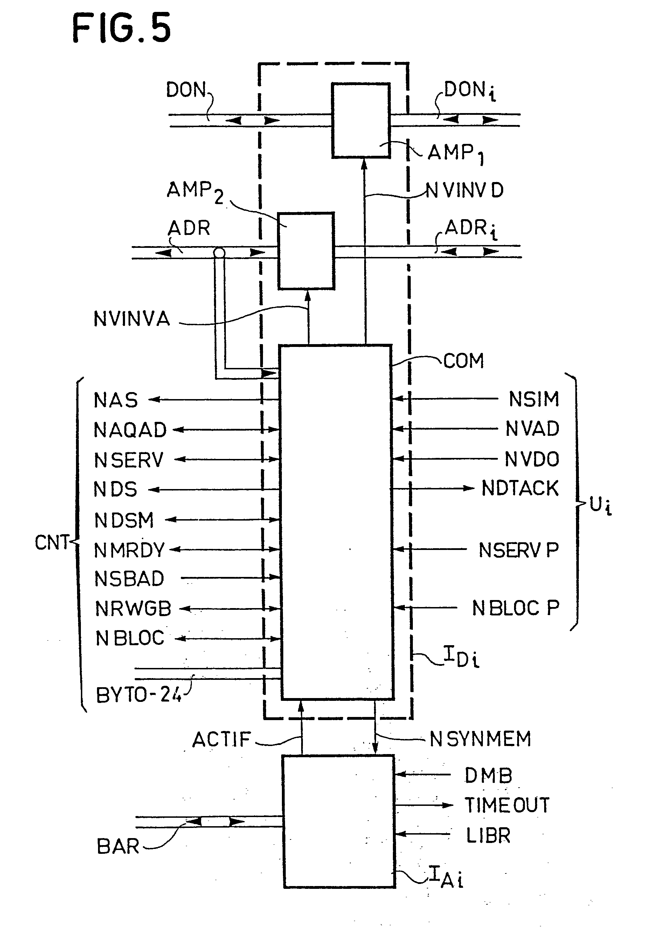

La figure 5 illustre un dispositif de couplage d'une unité de type maître aux différents bus constituant le canal "BUS", incorporant le dispositif d'allocation de ressource "DAR": interface $I_{AI}$ et bus "BAR". L'invention est concerné plus spécifiquement par l'interface de transfert de donnée $I_{Di}$.

Ce dernier interface comprend essentiellement trois blocs: un bloc de commande COM couplé au bus de gestion des transferts "CNT", et deux blocs AMP 1 et AMP 2, couplés respectivement aux bus données "DON" et adresses "ADR". Ces deux derniers blocs sont constitués essentiellement par des circuits d'amplification et d'adaptation: conversion de niveaux de tension des signaux logiques, par exemple.

Les circuits émetteurs de signaux couplés aux différents bus sont de préférence des éléments semi-conducteurs, du type dit à "collecteur ouvert" de manière à ce que le niveau bas ou zéro logique dans la convention adoptée soit prépondérant sur le niveau haut et que le niveau logique résultant soit un zéro logique lorsqu'au moins un des circuits émetteurs positionne un signal au niveau bas.

Le bloc de commande COM est couplé sur une de ses faces avec le bus "CNT". Il reçoit et émet les signaux de commande qui ont été décrits précédemment: "NAS, NAQAD" etc. Chacun des signaux est véhiculé par une liaison monofil. Sur l'autre face, le bloc de commande reçoit et émet des signaux de commande de l'unité qui lui est associée, dans le cas présent une unité de type maître qui peut être, par exemple, un processeur ou un microprocesseur. Si on désire que tous les interfaces $I_{DI}$ soient standards, non seulement vis à vis des couplages avec les différents bus, mais également vis à vis des unités connectées $U_I$, ces unités peuvent comprendre un coupleur assurant toutes les compatibilités logiques et technologiques nécessaires, ce dans le cas où les unités sont de familles et/ou de technologies différentes.

Le bloc de commande COM en outre communique avec l'interface d'allocation de ressource $I_{AI}$ à l'aide de deux signaux de commande et de synchronisation qui ont été décrits en relation avec le diagramme de la figure 9: "ACTIF et NSYNMEN".

Enfin le bloc de commande émet deux signaux internes à l'interface donnée $I_{Di}$, de validation ou d'invalidation "NVINVD" et "NVINVA" qui sont transmis respectivement aux blocs AMP 1 et AMP 2. Il reçoit du bloc "AMP 2", les signaux d'adresse véhiculés par le bus "ADR". Ces signaux sont comparés à une adresse interne, par exemple un numéro binaire, emmagasiné dans un registe ou cablé. Ce numéro peut être dérivé de celui présent sur le bus "NSTA" représentant le numéro de l'unité $U_i$ et transmis à l'interface $I_{AI}$. Pour ce faire le bloc de commande COM comporte un comparateur, par exemple réalisé à l'aide de portes logiques OU-EXCLUSIF ou d'un module du commerce.

Les signaux émis ou transmis à/ou de l'unité $U_i$ et transmis à l'interface $I_{AI}$.

Les signaux émis ou transmis à ou de l'unité $U_i$ associée à l'interface, comprennent un signal d'indication de mode se séquencement. Cette indication est fournie par le signal "NSIM". L'état logique de ce signal conditionne le fonctionnement de l'interface $I_{Di}$ selon deux modes de chronologie de transfert sur le bus qui ont été précédemment évoqués:

— le mode simultané: les cycles d'adresse et de donnée sont exécutés en parallèle;
— et le mode décalé: le cycle d'adresse précéde obligatoirement un cycle de donnée. Ce mode implique que les unités réceptrices mémorisent les adresses.

Dans ce cas, le bloc commande COM doit comprendre ou être associé à une mémoire. Cette mémorisation autorise le fonctionnement dit à "accès direct à la mémoire" ou D.M.A. ("direct access memory") selon la terminologie anglosaxonne. Ce mode de séquencement permet d'assurer une meilleure fiabilité du système par une meilleure protection du bus: celle de ne jamais avoir les amplificateur d'adresse AMP 2 et de donnée AMP 1 en fonctionnement simultané. Il permet aussi de réaliser un fonctionnement multiplexé en confondant les deux bus en un seul, notamment pour étendre le champ d'adresse en augmentant le nombre possible de bits du mot d'adresse par le nombre de liaisons que comporte le bus "DON".

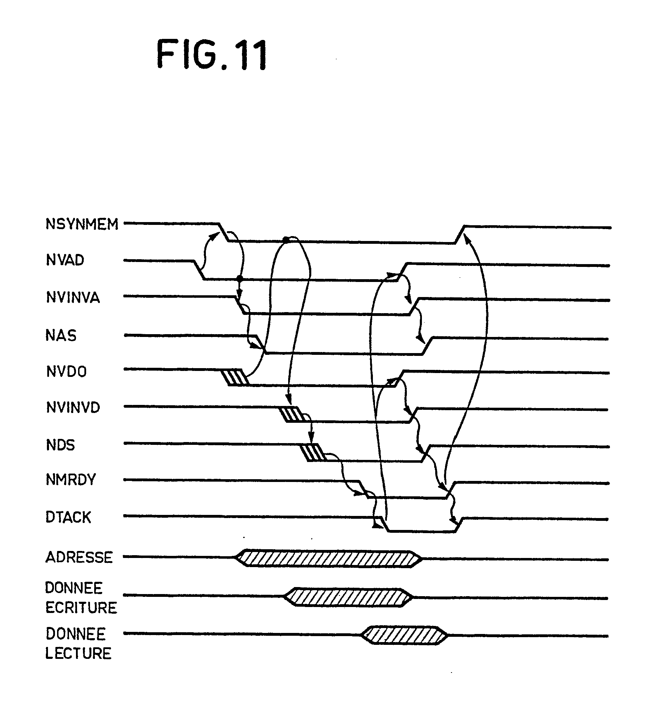

Les autres signaux reçu ou émis de/ou vers l'unité associée seront détaillés lors de la description du fonctionnement de l'interface donnée $I_{Di}$ illustré par les diagrammes des figures 11 à 16.

Les bus "SPE" et les signaux de service véhiculés par ce bus ne sont pas représentés sur la figure 5 dans un but de simplification car ils sortent du cadre de l'invention et ne sont pas nécessaires à sa bonne compréhension.

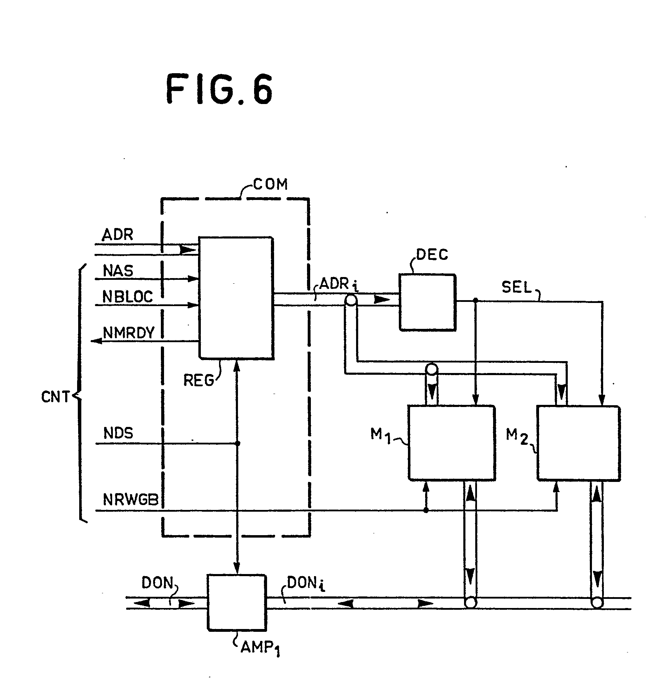

Lorsque l'interface de donnée $I_{Dx}$ est couplé à une unité $U_x$ de type esclave il est possible, si on le désire, de simplifier cet interface. La figure 6 illustre un exemple d'un tel interface. L'unité $U_x$ est dans l'exemple considéré une batterie de cartes mémoires vives à accès aléatoire dont deux, $M_1$ et $M_2$ ont été représentées sur la figure 6.

Le bloc AMP 2 (figure 5) est supprimé. Le bloc AMP 1, par contre, comporte un organe de mémorisation du type mémoire tampon relié au bus donnée interne "DONi" auquel sont couplées les bornes d'écriture/lecture des cartes mémoire.

Le bloc de commande COM doit comprendre un circuit REG d'enregistrement et de reconnaissance d'adresse.

Une partie des bits d'adresse sont comparés à un code interne de façon analogue à ce qui a été décrit en relation avec la figure 5 et à activer l'unité $U_x$ adressée. Ensuite les bits d'adresses servent à adresser des positions particulières d'adresses dans les cartes mémoires sur un bus interne "ADRi", pour y lire ou écrire des données véhiculées par le bus interne "DONi". Le bloc COM comporte également un circuit de comptage pouvant incrémenter l'adresse enregistrée par les circuits REG sur le front de montée du signal "NDS". Enfin le bloc COM génère le signal "NMRDY" ou signal d'acquitement de données.

Les seuls signaux de commandes indispensables au fonctionnement de l'interface $I_{Dx}$ sont les signaux "NAS, NDS, NBLOC et NRWGB" ce dernier pour la commande de lecture ou d'écriture.

Enfin incorporé dans le bloc COM ou associé aux cartes de mémoires $M_1$, M2 comme représenté sur la figure 6, un circuit de décodage DEC émet des signaux "SEL" pour la sélection d'une des cartes de mémoires dérivées des signaux d'adresse.

Le fonctionnement des divers interfaces va maintenant être décrit dans le cas général, en relation avec les diagrammes des figures 11 à 16. Dans tous les cas les transferts s'effectuent de façon asynchrone.

Le diagramme de la figure 11 illustre un transfert maître-esclave ($U_i$ à $U_x$) en mode simultané

par mot. L'unité active $U_i$ émet le signal "NVAD" vers l'interface associée $I_{Di}$ pour débuter une séquence de transfert. L'interface émet le signal "NVINVA" vers le bloc AMP 2 autoriser les amplificateurs d'adresse, puis émet le signal "NAS". Parallèlement, l'unité émet le signal NVDO pour demander le transfert des données. L'interface sans attendre l'acquittement de l'adresse (mode simultané), émet le signal "NVINVD" vers le bloc AMP 1 pour autoriser les amplificateurs de ce dernier à valider les données sur le bus "DON" et le signal "NDS" vers le bus "CNT" en mode écriture. Après décodage des adresses et satisfaction des temps d'accès, l'unité adressée, répond en émettant le signal "NMRDY". L'interface après réception de ce signal émet vers l'unité $U_i$ le signal "DTACK" pour débloquer et terminer ce cycle de transfert. L'unité $U_i$ enlève alors les signaux "NVAD" et "NVDO" pour débloquer l'interface avant un nouveau transfert. Sur la désactivation du dernier de ces deux signaux ("NVAD, NVDO") l'interface relève les signal "NVINVA, NAS, NVINVD et NDS". Sur le front montant du signal "NDS", l'unité réceptrice dépositionne le signal "NMRDY". "NSYNMEM", signal englobant un transfert sur le bus "DON", (utilisé par l'interface d'allocation de ressource $I_{Al}$) est validé dès réception du signal "NVAD" et invalidé lorsque l'unité adressée retire le signal d'acquittement des données ("NMRDY").

Le diagramme de la figure 12 illustre un transfert par blocs de données, dans les mêmes conditions que précédemment.

Ce mode est activé par le signal interne "NBLOCP" positionné par l'unité $U_i$ et transmis par "NBLOC" sur le bus "CNT". L'initialisation du transfert est identique à celle du transfert par mot. Après le premier transfert l'interface attend une nouvelle activation du signal "NVDO" par l'unité $U_i$ pour réaliser le transfert de données suivant. L'unité $U_i$ arrête ce mode en n'activant plus le signal "NVDO" et en dépositionnant le signal "NBLOCP".

Les cycles dedonnées s'effectuent de la manière suivante:

L'activation du signal "NVAD" valide le signal "NSYNMEM". L'ouverture des amplificateurs du bloc AMP 1 est commandée par le signal "NVINVD". Ce signal est actif dès que le signal "NSYNMEM" est validé. L'activation du signal "NVINVD" autorise la transmission du signal de validation des données "NDS". Après un temps suffisant correspondant au temps nécessaire à l'unité adressée $U_x$ pour positionner les informations sur le bus de données "DON" (lecture) ou pour prendre en compte les informations présentes (écriture), cette unité maître $U_1$ émet le signal "NMRDY" vers l'interface $I_{Di}$. Ce dernier transmet l'acquittement vers l'unité $U_i$ par le signal "DTACK". L'unité $U_i$ invalide alors le signal "NVDO" désactivant les signaux "NVINVD, NDS puis NMRDY et DTACK", la remontée de "NMRDY" inhibe le signal "NSYNMEM". Le transfert alors terminé.

Dans ce mode les adresses doivent être enregistrées dans l'unité $U_x$ réceptrice. Le chargement se fait sur le front de montée du signal "NAS". L'adresses est incrémentée à chaque front de montée du signal "NDS". Le signal "NBLOC" informe le récepteur que les prochains transferts seront du type bloc.

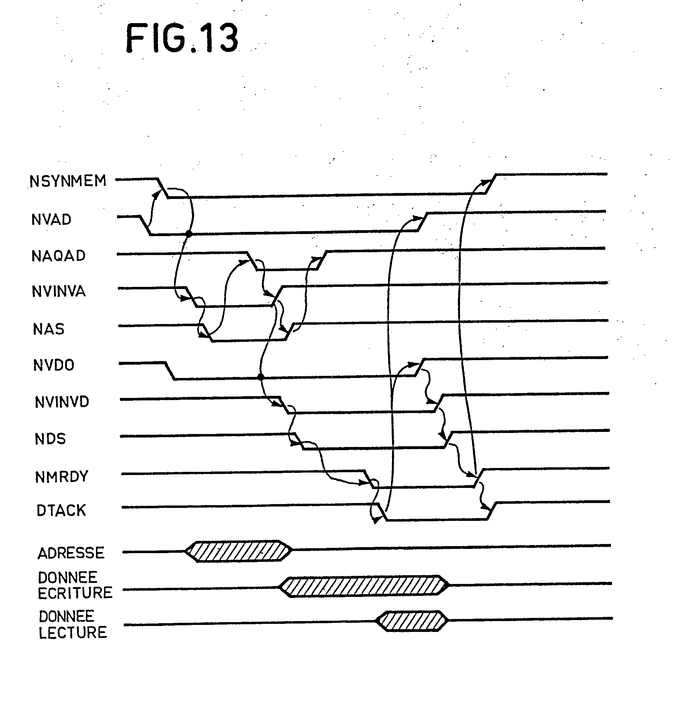

Le diagramme de la figure 13 illustre un transfert en mode décalé par mot. Ce mode nécessité nécessairement la mémorisation des adresses dans l'unité réceptrice. Le chargement s'effectue sur le front de montée de "NAS". Un interface permettant ce mode a été décrit en relation avec la figure 6.

L'unité active $U_i$ émet le signal "NVAD" vers l'interface $I_{Di}$ pour débuter une séquence de transfert. L'interface $I_{Di}$ émet le signal "NVINVA" vers l'unité $U_i$ pour autoriser l'ouverture des amplificateurs d'adresse AMP 2, puis émet le signal "NAS". Parallèlement le processeur émet le signal "NVDO" pour demander le transfert des données. L'interface $I_{Di}$ attend l'acquittement de l'adresse émis par le récepteur par le signal "NAQAD" (Mode décalé). A la réception de ce signal, il ferme les amplificateurs d'adresse (par le signal "NVINVA") et relève le signal "NAS", puis émet le signal "NVINVD" vers l'unité $U_i$ pour autoriser cette dernière à valider les données sur le bus "DON" en mode écriture et enfin émet le signal "NDS" sur le bus "CNT". Après satisfaction des temps d'accès, le récepteur $U_x$ répond en émettant le signal "NMRDY". L'interface $I_{Di}$, après réception de ce signal, émet vers l'unité $U_i$ le signal "DTACK" pour débloquer et terminer ce cycle de transfert. L'unité $U_i$ enlève alors les signaux "NVAD et NVDO" pour débloquer l'interface $I_{Di}$ avant un nouveau transfert. Sur la désactivation du dernier de ces deux signaux ("NVAD, NVDO") l'interface $I_{Di}$ relève les signaux "NVINVD et NDS". Sur le front montant du signal "NDS", le récepteur $U_x$ dépositionne le signal "NMRDY". Le signal "NSYNMEM" englobant un transfert sur le bus "BDO", utilisé par l'interface d'allocation de ressource $I_{Ax}$, est validé dès réception du signal "NVAD" et invalidé lorsque le récepteur $U_x$ retire le signal d'acquittement des données "NMRDY".

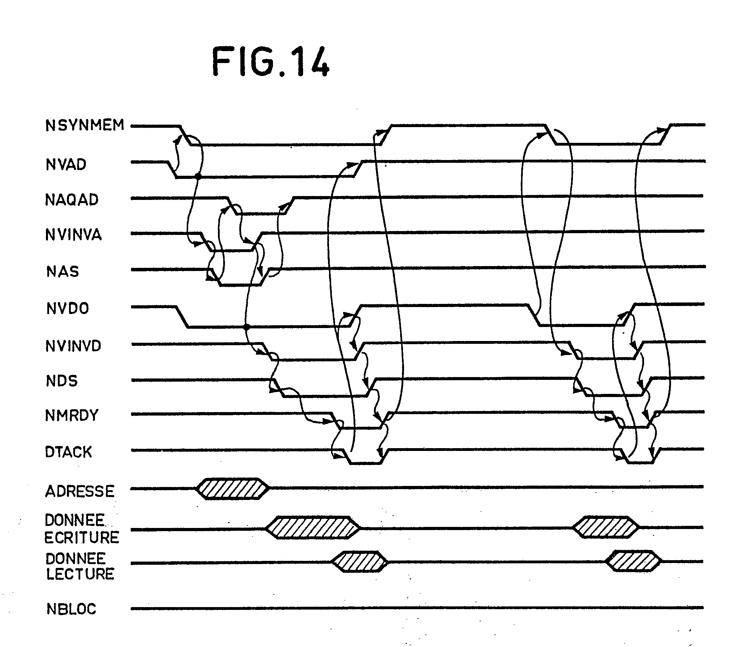

Le transfert par bloc en mode décalé est illustré par le diagramme de la figure 14.

Ce mode est activé par le signal "NBLOCP" positionné par l'unité maître $U_i$. L'initialisation du transfert est identique à celle du transfert par mot. Après le premier transfert l'interface $I_{Di}$ attend une nouvelle activation du signal "NVDO" par l'unité $U_i$ pour réaliser le transfert de données suivant. L'unité $U_i$ arrête ce mode en n'activant plus le signal "NVDO" et en dépositionnant le signal "NBLOCP".

Les cycles de données s'effectuent de la manière suivant: l'activation du signal "NVDO" valide le signal "NSYNMEM" (utilisé par l'interface $I_{Al}$). L'ouverture des amplificateurs du bloc AMP 1 est commandée par le signal "NVINVD". Ce signal est actif dès que le signal "NSYNMEM" est validé. L'activation du signal "NVINVD" autorise la transmision du signal de validation des données "NDS". Après un temps suffisant correspondant au temps nécessaire au récepteur $U_x$ pour positionner les informations sur le bus de données (lecture) ou pour prendre un compte les informations présentes (écriture) le récepteur émet le signal "NMRDY" vers l'interface $I_{Di}$. Ce dernier transmet l'acquittement vers l'unité $U_i$ sur "DTACK". Cette dernière invalide alors le signal "NVDO" désactivant les signaux "NVINVD, NDS" puis "NMRDY et DTACK", la remonté du signal "NMRDY" inhibe le signal "NSYNMEM". Le transfert est alors terminé.

Dans ce mode les adresses doivent être enregistrées dans le récepteur $U_x$. Le chargement se fait sur le front de montée du signal "NAS". L'adresse est incrémentée à chaque front de montée du signal "NDS". Le signal "NBLOC" informe le récepteur que les prochains transferts seront du type bloc.

Les transferts de maître à maître s'effectue de manière analogue à ce qui vient d'être décrit.

L'échange du type point à point, c'est à dire d'une unité de type maître $U_i$ à qui le bus "BDO" a été alloué à une seule autre unité de type maître $U_j$ est sélectionnée en positionnant l'entrée, le signal "NSERVP" de l'interface $I_{Di}$ à l'état logique "zéro". La fonction des signaux "NSERV et NDSM" en fonction des signaux "NVAD et NVDO" est identique à celle des signaux "NAS et NDS", quelque soit le mode de séquencement (simultané ou décalé).

La validation du signal "NSERV" indique qu'une adresse est valide sur le bus adresse "ADR". Les quatre bits de poids faible indiquent le numéro de l'unité $U_j$ appelée. Cette unité valide le signal "NAQAD" indiquant qu'elle s'est reconnue.

Le signal "NDSM" peut apparaître en même temps que le signal "NSERV". L'unité $U_j$ appelée doit répondre par le signal "NMRDY" pour accepter les données et terminer le transfert.

En mode diffusion, l'unité maître $U_i$ doit positionner le signal "NBCAST" à l'entrée de l'interface $I_{Di}$ à l'état logique "zéro". De ce fait les échanges seront en synchronisme avec l'émetteur du signal "BCAST" si aucune unité ne répond (signal "NMRDY"). Autrement, c'est la première unité $U_i$ qui prend en compte la diffusion qui synchronise le transfert. L'unité réceptrice $U_j$ est dans une réalisation préférée également de type maître, mais ce mode de transfert est également généralisable aux transferts de type maître à toutes unités, maîtres ou esclaves.

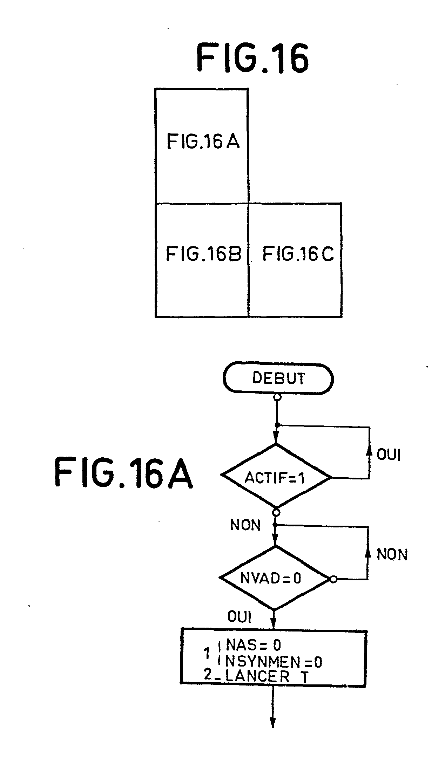

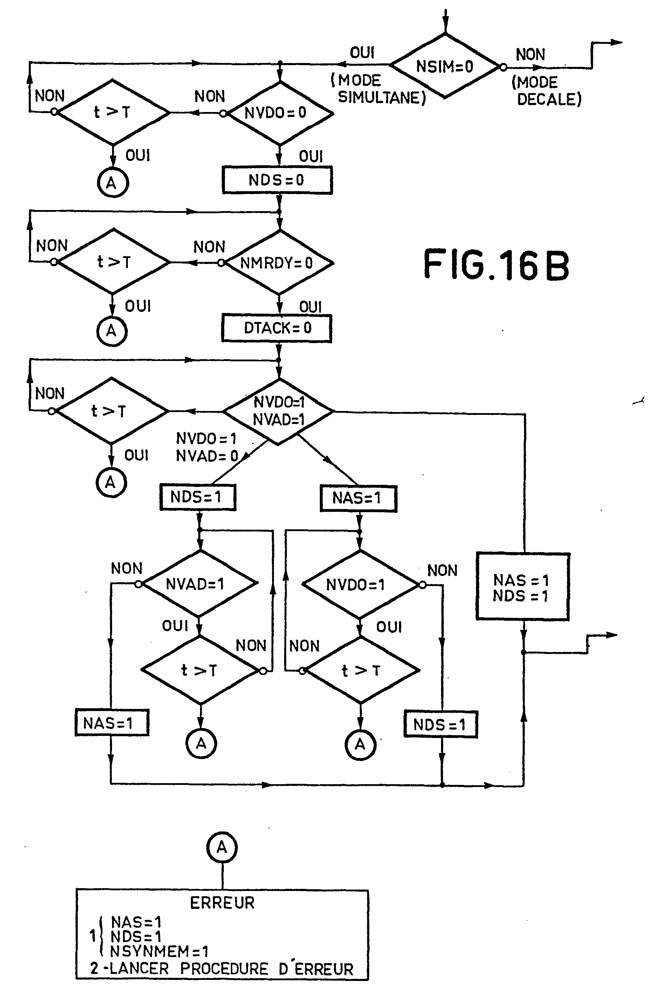

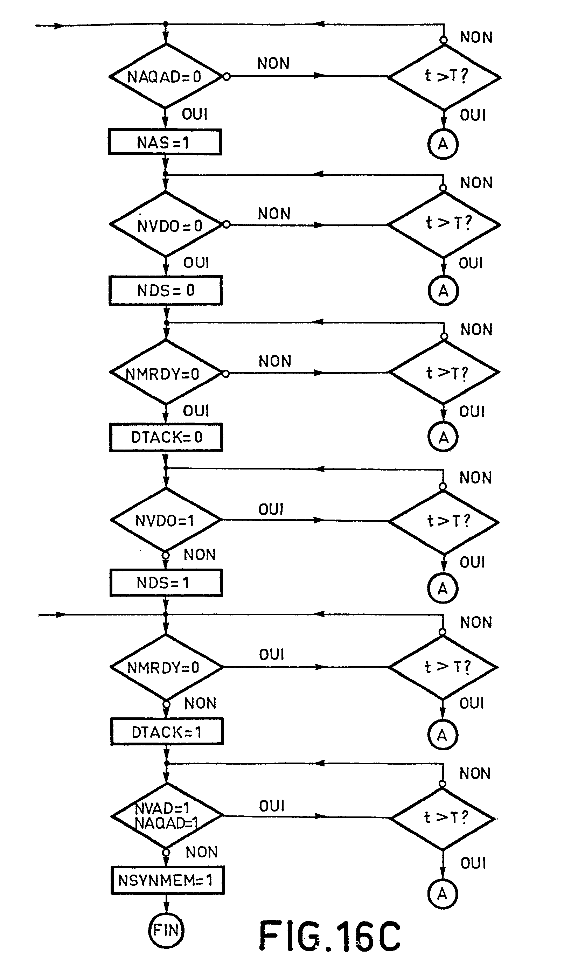

Ces différents protocoles, procédures et modes de transferts sont résumés par l'organigramme des figures 16A à 16C. La figure 16 illustre l'interconnexion de ces figures 16A à 16C. Sur cet organigramme figure également des tests de durée de transfert élémentaire. Un test est effectué en permanence pour évaluer le temps écoulé depuis le début de chaque transfert. Lorsque le temps écoulé est plus grand qu'une durée T déterminée, il y a détection d'erreur. Ce genre de procédure est connue de l'homme de métier et ne nécessite pas une plus ample description. Pour ce faire, il peut être utilisé une base de temps, par exemple une bascule monostable initialisée par le signal "ACTIF" émis par l'interface d'allocation de ressource $I_{Ai}$.

Enfin, dans une variante particulière de réalisation, comme il a été rappelé, l'invention permet des substitutions d'adresse directement sur le bus "BDO". Cette variante autorise donc un adressage virtuel, le bus étant entièrement transparent.

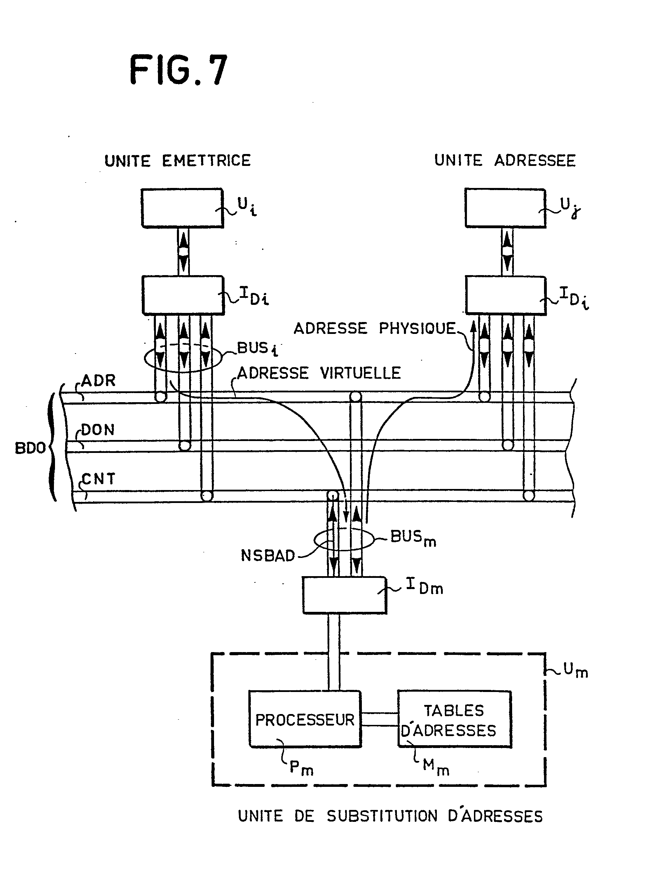

Pour ce faire le système comporte, dans un exemple de réalisation concrète, une unité $U_m$ spécialisée de type esclave comme illustré par la figure 7. L'unité $U_m$ est essentiellement constituée par un processeur $P_m$ associée à des organes $M_m$ de mémorisation de tables de conversion d'adresses. Ce processeur surveille les adresses véhiculées par le bus adresse "ADR". Lorsque l'adresse émise correspond pas à une adresse réelle, c'est à dire à une adresse d'unité $U_i$ physiquement raccordée au bus de couplage "BDO", l'interface $I_{Dm}$ associée à l'unité $U_m$ valide le signal "NSBAD" sur le bus de gestion des transferts "CNT" pour demander l'invalidation de l'adresse précédemment émise, calcule une nouvelle adresse et émet à son tour cette adresse calculée sur le bus "ADR".

La première partie du cycle de transfert est le début d'un transfert du type maître $U_i$ à esclave, l'esclave étant l'unité spécialisée $U_m$ et le cycle se continue par un transfert du même maître $U_i$ à une quelconque des unités du système raccordées au bus "BDO" dont l'adresse physique a été calculée par le processus $P_m$ à partir de l'adresse virtuelle précédemment émise et substituée sur le bus adresse ADR à cette adresse virtuelle. Tous les types et modes de transferts précédemment décrit peuvent s'effectuer pendant cette seconde partie du cycle.

Dans l'art connu, l'adresse est calculée soit au départ, par l'unié émettrice ou son interface, soit à l'arrivée dans les mêmes conditions, c'est à dire par toutes les unités connectées au bus "BDO" de manière à ce que l'une de ces unités reconnaisse son adresse après conversion de l'adresse virtuelle en une adresse réelle ou physique. Ceci impose une modification des tables de conversions d'adresse de toutes les unités en cas de reconfiguration du système.

Sur la figure 7, le bus "SPE" n'a pas été représenté. L'interface $I_{Dm}$ n'est reliée qu'au bus adresse "ADR" et gestion des transferts "CNT", notamment pour ce dernier par la liaison "NSBAD", ce dernier signal étant émis par l'interface $I_{Dm}$ et transmis à toutes les interfaces associées aux unités de type maître pour invalider l'adresse émise par l'unité $U_i$ ayant la maîtrise instantanée du bus "BDO".

Le rôle d'unité spécialisée peut, dans une variante non représentée, être également joué par une des unités régulières connectées au bus "BDO". Dans ce cas, si le système S subit une reconfiguration, seules les tables de conversion d'adresse associées à cette unités sont à modifier. Une des tâches affectées à cette unité est la conversion d'adresse, lorsque l'adresse véhiculée par le bus d'adresse "ADR" est un dehors du champ d'adresses physiques attribuées aux unités $U_1$ à $U_n$ connectées au bus "BDO". C'est le cas parr exemple si q est le nombre de bits d'adresse et si $2^q$ est plus grand que n, nombres d'adresses réelles correspondant à des unités connectées.

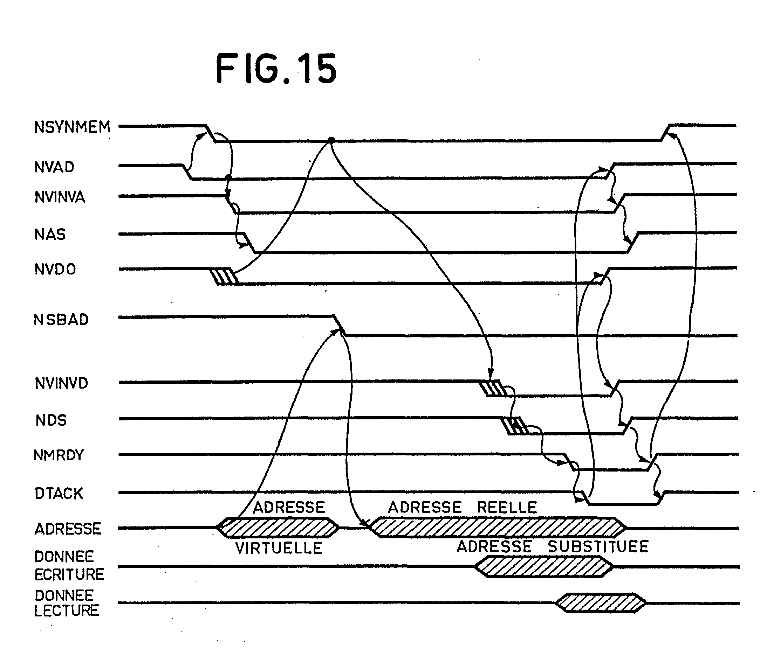

Le diagramme de la figure 15 illustre un cas de transfert de type maître à esclave en mode simultané par mot. En dehors de la reconnaissance d'une adresse hors du champ des adresses réelles, l'émission du signal d'invalidation "NSBAD", le calcul d'une nouvelle adresse et l'émission de cette nouvelle adresse, les autres étapes du transfert s'effectue de façon analogue à celle décrite en relation avec la figure 11. Les autres modes de transferts peuvent être décrits de la même manière, des figures 12 à 14.

Les différents circuits électroniques constituant les interfaces données $I_{DI}$ à $I_{Dn}$ nécessaires pour satisfaire les conditions logiques, chronologies et mémorisations décrites en relation avec les diagrammes des figures 11 à 15, ainsi que l'organigramme de la figure 16 peuvent être réalisés conformément à de nombreux schémas logiques qui sont à la portée de l'homme de métier, schémas logiques qui dépendent de la technologie spécifique retenue pour la réalisation concrète du dispositif selon l'invention.

Pour fixer les idées, à titre d'exemple non limitatif, le choix de la technologie mise en oeuvre peut se porter sur une technologie rapide de type "Schottky".

Pour les fonctions logiques combinatoires, il peut être utilisé dans ce cadre des portes logiques réalisant les fonctions logiques "ET, OU, NON-ET et NON-OU" dans leurs acceptations habituelles. Il peut être également utilisé des inverseurs qui ont pour but de fournir le complément logique d'un signal binaire présent sur leur entrée. Par convention, le niveau haut est le "1" logique, représenté dans le cadre de la technologie choisie par une tension +5V, le niveau bas étant le "0" logique, représenté par une tension nulle.

Il peut aussi être utilisé pour les fonctions logique séquentielles et les étages de registres de mémorisation des bascules de type "D", dont il est utile d'en rapeller la configuration. Celle-ci, ainsi que la table de vérité et le diagramme de temps d'une telle bascule peuvent être trouvés parmi d'autres publications, dans le livre français: "DE LA LOGIQUE CABLEE AUX MICROPROCESSEURS" par BERNARD et autres, au tome 1, chapitre X.4, pages 136—138 (Editions EYROLLES: PARIS; 1979).

Une telle bascule comporte une entrée de donnée D, une entrée d'horloge H, une entrée de prépositionnement Pr ("preset"), une entrée de remise à zéro Cl ("clear") et deux sorties: vraie Q et inversée Q. Les entrées Pr et Cl sont asynchrones, et remettent la bascule à "1" ou "0" respectivement, indépendamment des signaux d'horloge. Le mode synchrone est défini par l'entrée de donnée D et l'entrée d'horloge H. La bascule recopie l'entrée D après l'apparition d'un front montant du signal d'horloge appliqué à l'entrée H, compte-tenu d'un délai de prise en compte, de l'ordre de quelques nanosecondes pour la technologie choisie.

Il doit être rappelé que les circuits logiques dont les sorties sont connectées en parallèle sur les lignes constituant le bus BDO sont du type dit à "collecteur ouvert". En effet il faut que le niveau bas soit prépondérant par rapport au niveau haut.

En résumé, le procédé de l'invention et le dispositif de mise en oeuvre permettent d'accommoder dans un même système des unités de familles et/ou de technologie différentes, pouvant fonctionner selon des cycles et chronologies différentes, et assurent la gestion entièrement décentralisée des transferts de données de manière asynchrone entre ces unités par un bus de couplage. Ces unités, qui peuvent être indifféremment du type maître ou de type esclave, peuvent comprendre notamment plusieurs processeurs indépendants.

Les transferts peuvent s'effectuer selon trois structures d'adressages différenciées simplement à l'aide d'un jeu de signaux de commande:

— transfert maître-esclave: signaux "NAS-NDS;
— transfert maître à maître: signaux "NSERV-NDSM";
— transfert maître à toutes unités à l'aide d'un signal supplémentaire "BCAST".

La chronologie des échanges peut également s'effectuer selon deux modes: adresses et données en mode simultané ou décalé.

Enfin dans une variante de réalisation particulière, des substitutions d'adresses peuvent être réalisées directement sur le bus adresse "ADR" pendant la procédure de transfert.

Le dispositif de transmission selon l'invention peut naturellement être réalisé de façon concrète selon différentes architecture à la portée de l'homme de métier, l'exemple de réalisation décrit n'ayant qu'un but illustratif non limitatif de la portée de l'invention.

# 0 063 071

TABLEAU I

| | |
|---|---|
| ACTIF: | signal indiquant que la ressource a été allouée à une unité $U_i$. Ce signal est synchronisé avec l'horloge $H_i$ de l'unité $U_i$ se le numéro NACT correspond à cette unité, le signal ACTIF synchronisé avec la fin de course dans les autres cas; il se dépositionne quand $U_i$ libère la ressource après la retombée de DMB, le signal actif ne change pas de valeur quand une opération est en cours. |
| ADR: | bus de liaison entre les interfaces d'échange de données $I_{Di}$ véhiculant des mots d'adresse. |
| $BA_i$: | bus local couplant une unité $U_i$ à son interface d'allocation de ressources $I_{Ai}$. |
| BAR: | bus couplant les interfaces d'allocation de ressources $I_{Ai}$, comprenant les bus PRIO, NACT et les liaisons NCOUR, NDEMAN et PERSO. |
| BDO: | canal de liaison pour l'échange des données entre les unités $U_1$ à $U_n$, comprenant les bus ADR, CNT, DON et SPE. |
| $BUS_i$: | bus local couplant un interface d'échange de données $I_{Di}$ avec le canal BUS. |
| CNT: | bus de liaison entre les interfaces d'échange données $I_{Di}$ à $I_{Dn}$ véhiculant des signaux de gestion des transferts de données entres les unités $U_1$ à $U_n$. |
| DAR: | dispositif d'allocation de ressource. |
| DMB: | signal de demande de ressource, par exemple de demande du bus BDO, actif à l'état haut et maintenu en permanence tan que la demande n'a pas été satisfaite. |
| DON: | bus de liaison entre les interfaces d'échange de données $I_{Di}$ véhiculant des mots de données |
| $H_i$: | signaux d'horloge d'une unité $U_i$ de fréquence $f_i$. |
| $2H_i$: | signaux d'horloge transmis à l'interface $I_{Ai}$ par l'unité $U_i$ et de fréquence $2f_i$. |
| $I_{Ai}$: | interface d'allocation de ressource associé à l'unité $U_i$. |
| $I_{Di}$: | interface d'échange de données associé à l'unité $U_i$. |
| LIBR: | signal de libération de la ressource par l'interface $I_{Ai}$, généré par l'unité $U_i$, actif à l'état haut. |
| NCOUR: | signal lançant une course; actif à l'état bas; bloque toute autre demande après sa remontée; généré par un élément logique du type à "collecteur ouvert". |
| NDEMA: | signal de demande de ressource, par exemple de bus BDO; actif à l'état bas; positionné par toutes les unités. |
| NACT: | bus de liaison multiple entre les interfaces d'allo cations de ressource $I_{A1}$ à $I_{An}$ véhiculant le complément du numéro de l'unité $U_i$ gagnante de la course et généré par des éléments logiques du type "a collecteur ouvert". |
| NSTA: | numéro attribué à chaque unité $U_i$. |
| NSYNMEM: | signal périodique généré par les interfaces d'échange de données $I_{D1}$ à $I_{Dn}$; actif à létat bas et de durée égale à un transfert de donnée sur le canal BUS à l'initiative d'une unité $U_i$; utilisé pour synchroniser l'interface $I_{Ai}$ associé à l'unité $U_i$. |
| PERSO: | signal indiquant qu'il n'y a aucune unité active; actif à l'état haut et généré par un élément logique du type à "collecteur ouvert". |
| PRIO: | bus de liaison multiple entre les interfaces d'allocations de ressource $I_{Ai}$ à $I_{An}$ véhiculant en mot identifiant l'unité demandant la ressource la plus prioritaire et généré par des éléments logiques du type à "collecteur ouvert". |

14

| S: | système comprenant les unités $U_1$ à $U_n$. |
|---|---|
| SPE: | bus de liaison entre les interfaces d'échange de données $I_{D1}$ à $I_{Dn}$ véhiculant des signaux de service. |
| TIMEOUT: | signal indiquant l'intervalle de temps maximum de temps alloué à une unité $U_i$ si d'autres unités sont demanderesses de la maîtrise de la ressource. |
| $U_i$: | unité du système S de rang i (1 à n), processeur ou unité périphérique pouvant rentrer en compétition avec au moins une autre des unités $U_1$ à $U_n$ pour l'accès à une ressource commune. |

TABLEAU II

| BYT0—BYT8: | signaux de validation de chacun des octets possibles. |
|---|---|
| BYT16—BYT24: | du mot de donnée véhiculé par le bus DON. |
| NAS: | lorsqu'un dialogue maître esclave s'établit, ce signal indique qu'une adresse est présente et stable sur le bus ADR. |
| MAQAD: | signal reçu par les interfaces $I_{Di}$. Les unités réceptrices $U_i$ indiquent par ce signal que l'adresse a été bien reçue et décodée. Il n'est utilisé qu'en mode décalé. |
| NBCAST: | le signal est activé par une unité maître pour prévenir les interfaces $I_{Di}$ que le transfert suivant est une diffusion vers toutes les unités connectées au canal BUS. |
| NBLOC: | signal émis par une unité $U_i$ répétant le signal NBLOCP. |
| NBLOCP: | signal positionné par une unité $U_i$ maître, il indique que les transferts suivants vont s'effectuer en mode "bloc". Il est transmis à l'interface associée $I_{Di}$. |
| NDS: | signal qui valide les données sur le bus DON lors d'un dialogue maître-esclave. |
| NDSM: | signal identique à NDS lors d'un dialogue maître à maître. |
| NDTACK: | signal émis par une interface donnée $I_{Di}$ vers l'unité $U_i$ associée pour lui indiquer que le transfert de donnée est réalisé. |
| NMRDY: | signal reçu par un interface émetteur $I_{Di}$. Les unités réceptrices $U_x$ indiquent que la donnée est stable (lecture) ou que la donnée est acquise (écriture). |
| NRWGB: | signal commandant sélectivement le mode écriture ou le mode lecture dans une unité esclave adressée. |
| NSERV: | identique à NAS dans un dialogue maître à maître; répétition du signal NSERVP émis par l'unité $U_i$ et transmis à l'interface $I_{Di}$ associée. |
| NSERVP: | signal reçu par l'interface $I_{Di}$ est positionné par une unité $U_i$ pour indiquer que le transfert suivant est un transfert de maître à maître. |
| NSIM: | indique le mode de fonctionnement choisi pour l'utilisation de l'interface $I_{Di}$. NSIM=0: mode simultané, les adresses sont envoyées et maintenues sur le bus ADR jusqu'à réception des données. NSIM=1: mode décalé, les données ne doivent être envoyées qu'après réception de l'acquittement d'adresse signal (NAQAD). |
| NVAD: | signal transmis à un interface $I_{Di}$ par l'unité $U_i$ associée; indique qu'une adresse est présente et stable en entrée des amplificateurs d'adresse AMP 2. |
| NVDO: | signal émis par une unité $U_i$ et reçu par son interface associée $I_{Di}$; initialise un transfert de donnée correspondant à une adresse déjà envoyée. |

15

TABLEAU II (contd.)

| NVINVA: | signal activé par une interface $I_{DI}$ sur réception signal NVAD; doit être utilisé pour valider/invalider les amplificateurs d'adresse AMP 2 de l'unité émettrice. |
|---|---|
| NVINVD: | signal activé par une interface $I_{DI}$ sur réception du signal NVDO; doit être utilisé pour valider/invalider amplificateurs de donnée AMP 1 de l'unité émettrice. |
| NSBAD: | signal interdissant l'envoi des signaux d'adresse sur le bus ADR; n'affecte pas le transfert des données. |

### Revendications

1. Procédé de transmission de données numériques entre des unités ($U_1$—$U_n$) d'un système (S) de traitement de ces données par un canal unique de transmission de données (BDO) de type bus à liaisons multiples auquel sont connectées par l'intermédiaire de circuits d'interface ($I_{DI}$—$I_{Dn}$) toutes les unités constituant ledit système, le système comprenant des unités de type maître ($U_1$, $U_i$, $U_n$) pouvant demander et acquérir la maîtrise instantanée du canal de transmission pour adresser au moins une autre unité dudit système et initier des échanges de données sur ce canal, et des unités de type esclave ($U_x$) pouvant être adressées par une unité de type maître, ainsi qu'un dispositif d'allocation (DAR) de la maîtrise instantanée dudit canal à une des unités de type maître demanderesse de la maîtrise instantanée de ce canal, ce dispositif d'allocation étant en connexion avec toutes les unités de type maître; procédé caractérisé en ce que la transmission de données sur ledit canal s'effectue, au choix, selon trois structures d'adressage différenciées, chacune étant exclusive des deux autres et étant initiée par l'émission sur le un bus élémentaire dudit canal unique de transmission de données, par les circuits d'interface ($I_{DI}$) associée à l'unité de type maître ($U_i$) ayant acquis la maîtrise instantanée du canal de transmission, d'au moins un signal de commande particulier de type binaire, pouvant prendre des premier ("0") et second ("1") états lorgiques, transmis par ledit canal unique simultanément à tous les autres circuits d'interface et choisi parmi les trois signaux suivants:

— un premier signal de commande (NAS) qui est positionné au premier état logique ("0") en présence d'une adresse de destination de type esclave stable et initie un transfert de données point à point entre l'unité de type maître ($U_i$) ayant acquis la maîtrise instantanée de canal de transmission et une unité de type esclave ($U_x$) adressée par cette unité de type maître ($U_i$);
— un deuxième signal de commande (NSERV) qui est positionné au premier état logique ("0") en présence d'une adresse de destination de type maître stable et initie un transfert de données point à point entre l'unité de type maître ($U_i$) ayant acquis la maîtrise instantanée du canal de transmission et une seconde unité de type maître ($U_j$) adressée par la première unité de type maître ($U_i$);
— et un troisième signal de commande dont le positionnement au second état logique ("1") conjointement au positionnement au même état du premier ou du deuxième signal de commande (NAS, NSERV) initie un transfert de données en diffusion générale entre l'unité de type maître ($U_i$) ayant acquis la maîtrise instantanée du canal de transmission et au moins toutes les autres unités de type maître dudit système, toutes ces unités étant sélectionnées simultanément, ce troisième signal de commande interdisant de prendre en compte une adresse particulière.

2. Procédé selon la revendication 1, caractérisé en ce que le transfert de donnée en diffusion générale est initié entre l'unité de type maître ($U_i$) ayant acquis la maîtrise du canal de transmission (BDO) et toutes les unités dudit système, de type maître et/ou de type esclave.

3. Procédé selon l'une quelconque des revendications 1 ou 2, caractérisé en ce que l'adressage d'au moins une des unités dudit système s'effectue par l'émission conjointe à au moins l'un des trois signaux de commande par les circuits d'interface associés à l'unité de type maître ($U_i$) ayant acquis la maîtrise instantanée du canal de transmission (BDO) et sa transmission sur ce canal d'un mot d'adresse comportant q signaux de type binaire pouvant prendre des permier ("0") et second ("1") états logiques et la reconnaissance par l'unité adressé de ce mot d'adresse, dans lequel q est un nombre entier et $2^q$ au moins égal au nombre (n) d'unités constituant ledit système.

4. Procédé selon la revendication 3, caractérisé en ce que, $2^q$ étant supérieur au nombre (n) d'unités connectées au canal de transmission de données numériques, il est procédé à la surveillance permanente des mots d'adresse transmis par ledit canal par une des unités connectée à ce canal et à leur comparaison avec une table d'adresses virtuelles, et en ce que lors d'une comparaison positive, ladite unité calcule une adresse réelle correspondant à l'une des autres unités connectées au canal de transmission et substitue à l'adresse virtuelle, l'adresse réelle calculée.

5. Procédé selon la revendication 4, caractérisé en ce que pour effectuer la substitution d'adresses, les circuits d'interface associés à

16

l'unité de surveillance d'adresses, émettent lors d'une comparaison positive un signal (NSBAD) de type binaire transmis par le canal de transmission à l'unité de type maître ($U_l$) ayant émis ladite adresse virtuelle et pouvant prendre des premier ("0") et second ("1") états logiques, le premier état logique invalidant l'émission de ladite adresse virtuelle.

6. Procédé selon l'une quelconque des revendications 3 à 5, caractérisé en ce que la transmission de données numériques et celle des signaux d'adresse par le canal de transmission de données peut s'effectuer au choix selon un premier mode par lequel les signaux d'adresse sont émis simultanément aux données numériques et selon un second mode par lequel l'émission des données s'effectue après l'emission des signaux d'adresse et leur reconnaissance par l'unité adressée et en ce que le choix de l'un de ces deux modes est réalisé par la transmission par l'unité de type maître ayant acquis la maîtrise instantanée du canal de transmission aux circuits d'interface qui lui sont associés d'un signal de commande (NSIM) de type binaire pouvant prendre des premier ("0") et second ("1") états logiques, chacun de ces états étant associé à l'un des deux modes.

7. Procédé selon la revendication 6, caractérisé en ce que l'unité de type maître ayant initié le transfert de données sur le canal de transmission émet conjointement aux signaux d'adresse un premier signal de commande supplémentaire (NRWGB) de type binaire pouvant prendre des premier ("0") et second ("1") états logiques, associés respectivement à une commande de réception et à une commande d'émission de données par l'unité adressée par ladite unité de type maître et transmise par le canal de transmission.

8. Procédé selon la revendication 7, caractérisé en ce que ladite unité de type maître émet un deuxième signal de commande supplémentaire (NDS, NDSM) de type binaire pouvant prendre des premier ("0") et second ("1") états logiques, le premier état logique ("0") indiquant que les données transmises sont valides.

9. Procédé selon l'une quelconque des revendications 6 à 8 dans lequel les données à transmettre par le canal de transmission se présentent sous la forme de mots successifs comportant chacun plusieurs signaux de type binaire, procédé caractérisé en ce que le transfert de données peut s'effectuer au choix par mot unique ou par bloc de plusieurs mots et en ce que l'unité de type maître ayant initié le transfert de données transmet conjointement à l'émission desdites données, un troisième signal de commande supplémentaire (NBLOC) de type binaire pouvant prendre des premier ("0") et second ("1") états logiques, le premier état logique ("0") indiquant une transmission par bloc.

10. Procédé selon la revendication 9, caractérisé en ce que le transfert étant effectué par bloc de mots de donnée, le deuxième signal de commande supplémentaire (NDS, NDSM) est positionné au premier état logique ("0") avant l'émission de chacun des mots constituant le bloc et en ce que le mot d'adresse émis par l'unité de type maître est mémorisé par l'unité adressée au début du transfert et incrémenté d'une unité lors de chacun des positionnements ultérieurs dudit deuxième signal de commande supplémentaire (NDS, NDSM) au premier état logique ("0").

11. Dispositif pour la mise en oeuvre du procédé selon l'une quelconque des revendications 1 à 10, caractérisé en ce qu'il comprend des circuits d'interface ($I_{Di}$—$I_{Dn}$) connectés par une première face à l'aide d'un canal de liaison particulier ($BUS_1$—$BUS_n$) chacun à une des unités ($U_1$—$U_n$) dudit système (S) et par leur seconde face à un canal de transmissions bidirectionnelles (BDO) et en ce que le canal comprend au moins un premier faisceau de conducteurs (CNT) pour des liaison multiples, en nombre au moins égal au nombre de signaux de type binaire de commande (NAS, NSERV, BCAST, NDS, NDSM, NBLOC) au d'invalidation (NSBAD), chacun des signaux étant véhiculé par une liaison distincte; un deuxième faisceau de conducteur (ADR) pour des liaisons multiples véhiculant des mots d'adresse et un troisième faisceau de conducteur (DON) pour des liaisons multiples véhiculant des mots de données numériques à transmettre.

12. Dispositif selon la revendication 11, caractérisé en ce que le nombre de conducteurs du troisième faisceau (DON) véhiculant les mots de données à transmettre est un nombre divisible par huit de manière à véhiculer des mots de donnée composés d'octets.

13. Dispositif selon la revendication 11, caractérisé en ce que les circuits d'interface ($I_{Di}$) sont couplés aux conducteurs des faisceaux composant le canal de transmission par des éléments logiques émetteurs à jonctions semiconductrices du type à collecteur ouvert de manière à rendre le premier niveau logique ("0") prépondérant sur le second niveau logique ("1").

14. Dispositif selon la revendication 11, caractérisé en ce que chacun des circuits d'interface ($I_{Di}$) et l'unité ($U_i$) qui leur est couplée sont associé à une adresse et comprennent des moyens effectuant une comparaison permanente entre les mots d'adresse véhiculés par le deuxième faisceau de conducteurs (ADR) et cette adresse de manière à reconnaitre une adresse particulière et à activer l'unité lorsqu'elle est adressée.

15. Dispositif selon la revendication 14, caractérisé en ce que l'adresse associée à l'unité ($U_i$) est généré par des éléments à logique cablée.

16. Dispositif selon la revendication 14, caractérisé en ce que les circuits d'interface ($I_{Di}$) associés à une unité de type maître ($U_i$) comportent au moins un premier module (AMP 1) comprenant des moyens d'amplification commandables couplés sur une première face audit troisième faisceau de conducteurs (DON) et sur sa seconde face par un faisceau interne des conducteurs (DON i) à l'unité ($U_i$) associée, un deuxième module (AMP 2) commandables couplés sur une première face audit deuxième faisceau de conducteurs (ADR) et sur sa seconde face par un faisceau interne de conducteurs (ADR i) à l'unité (U, associée et un troisième module (COM) comprenant les dits moyens de comparaison d'adresses reliés à au moins une partie déterminée des liaisons dudit deuxième faisceau (ADR) et des moyens de logique combinatoire et de mémorisation recevant et émettant sur une de ses faces lesdits signaux de commande et d'invalidation véhiculés par le premier faisceau de conducteurs (CNT), et couplés sur son autre face par un faisceau des conducteurs véhiculant des signaux de commandes des circuits d'interface générés par l'unité associée ($U_i$).

17. Dispositif selon la revendication 16 caractérisé en ce que le troisième module émet deux signaux de commande interne (NVINVA, NVINVD) pour la commande de validation sélective, respectivement des moyens d'amplification des second (AMP 2) et premier (AMP 1) modules.

18. Dispositif selon la revendication 16 caractérisé en ce qu'en outre le troisième module est couplé à un dispositif d'allocation ($I_{AI}$, BAR) de la maîtrise instantanée du canal de transmission (BDO) autorisant le fonctionnement des circuits d'interface ($I_{Di}$) lorsque la maîtrise de ce canal a été attribuée à l'unité associée ($U_i$).

19. Dispositif selon la revendication 14 caractérisé en ce que les circuits d'interface ($I_{Dx}$) associés à une unité de type esclave comporte au moins un premier module (AMP 1) comprenant des moyens d'amplification et de mémorisation couplés sur une première face audit troisième faisceau de conducteurs (DON) et sur son autre face a un faisceau interne de conducteurs (DON i); et un second module (COM) comprenant lesdits moyens de comparaison d'adresses et des moyens de logique combinaitoire et de mémorisation (REG), ces moyens étant connectés audit deuxième faisceau de conducteurs (ADR) et à au moins une partie déterminée des liaisons dudit premier faisceau de conducteurs (CNT), ces liaisons comprenant la liaison véhiculant le deuxième signal de commande supplémentaire (NDS); et en ce que les moyens de mémorisation (REG) du second module (COM) enregistre le mot d'adresse véhiculé par le deuxième faisceau de conducteur (ADR) lors du positionnement de ce deuxième signal de commande supplémentaire (NDS) au premier état logique ("0"); les moyens de mémorisation comprenant en outre un compteur incrémentant d'une unité ledit mot d'adresse enregistré à chaque positionnement ultérieur du signal de commande (NDS) lors d'un transfert par bloc de mot de données.

20. Dispositif selon la revendication 14, caractérisé en ce que au moins l'un des circuits d'interface ($I_{Dm}$) connecté au canal de transmission (BDO) est associé à une unité ($U_m$) comportant des moyens de mémorisation ($M_m$) d'une liste d'adresses virtuelles et des moyens de calcul ($P_m$) pour élaborer à partir d'une de ces adresses virtuelles une adresse réelle représentant l'adresse d'une des unités ($U_i$) connectée par l'intermédiaire de circuits d'interface ($I_{Di}$) au

canal de transmission (BDO) et en ce que lesdits circuits d'interfaces ($I_{Dm}$) comprennent au moins des moyens de comparaison permanente des mots d'adresse véhiculés par le deuxième faisceau de conducteurs (ADR) avec ladite liste d'adresses virtuelles, des moyens pour émettre lors d'une comparaison positive un signal d'invalidation (NSBAD) du mot d'adresse précédemment véhiculé et le transmettre à l'unité émettrice ($U_i$) et des moyens pour substituer à cette adresse, l'adresse réelle calculée par lesdits moyens de calcul ($P_m$).

**Patentansprüche**

1. Verfahren zur Übertragung von Digitaldaten zwischen den Einheiten ($U_1$—$U_n$) eines Systems (S) zur Verarbeitung dieser Daten über einen einzigen Datenübertragungskanal (BDO) vom Bustyp mit Vielfachverbindungen und an welchen über Schnittstellenschaltungen ($I_{Di}$—$I_{Dn}$) alle das System bildenden Einheiten angeschlossen sind, wobei das System Einheiten vom Haupttyp ($U_1$, $U_i$, $U_n$) enthält, welche augenblicklich die Verfügung über den Übertragungskanal anfordern und erlangen können, um wenigstens eine weitere Einheit des genannten Systems zu adressieren und Datenaustauschvorgänge auf diesem Kanal einzuleiten, sowie Untereinheiten ($U_x$) enthält, die durch ein Einheit vom Haupttyp adressiert werden könne, sowie eine Zuweisungsvorrichtung (DAR) enthält, um die augenblickliche Verfügung über den genannten Kanal einer der Einheiten vom Haupttyp zuzuweisen, welche die augenblickliche Verfügung über diesen Kanal anfordert, wobei diese Zuweisungsvorrichtung mit allen Einheiten vom Haupttyp in Verbindung steht; wobei das Verfahren dadurch gekennzeichnet ist, daß die Datenübertragung auf dem Kanal wahlweise gemäß drei verschiedenen Adressierstruckturen erfolgt, wovon jeweils eine die zwei anderen ausschließt und dadurch initiiert wird, daß auf einem elementaren Bus des genannten einzigen Datenübertragungskanals durch die Schnittstellenschaltung ($I_{Di}$), welche derjenigen Einheit ($U_i$) vom Haupttyp zugeordnet ist, welche die augenblickliche Verfügung über den Übertragungskanal erlangt hat, wenigstens ein besonderes Steuersignal vom binären Typ ausgesendet wird, welches einen ersten Logikzustand ("0") und einen zweiten Logikzustand ("1") annehmen kann und über den genannten einzigen Kanal gleichzeitig zu allen anderen Schnittstellenschaltungen übertragen wird und unter den drei folgenden Signalen ausgewählt ist:

— ein erstes Steuersignal (NAS), welches auf den ersten Logikzustand ("0") gesetzt ist, wenn eine stabilen Bestimmungsadresse vom Untertyp vorhanden ist, und eine Datenüberführung Punkt für Punkt zwischen der Einheit ($U_i$) um Haupttyp, welche die augenblickliche Verfügung über den Übertragungskanal erlangt hat, und einer Einheit ($U_x$) vom Untertyp initiiert, welche durch diese Einheit ($U_i$) vom Haupttyp adressiert ist;

— ein zweites Steuersignal (NSERV), das auf den ersten Logikzustand ("0") eingestellt ist, wenn eine stabile Bestimmungsadresse vom Haupttyp vorhanden ist, und eine Datenüberführung Punkt für Punkt zwischen der Einheit ($U_i$) vom Haupttyp, welche die augenblickliche Verfügung über den Übertragungskanal erlangt hat, und einer zweiten Einheit ($U_j$) vom Haupttyp auslöst, welche durch die erste Einheit ($U_i$) vom Haupttyp adressiert wird;

— und ein drittes Steuersignal, dessen Einstellung auf den zweiten Logikzustand ("1") in Verbindung mit der Einstellung des ersten oder des zweiten Steuersignals (NAS, NSERV) in denselben Zustand eine Datenüberführung mit allgemeiner Verbreitung zwischen der Einheit ($U_i$) vom Haupttyp, welche die augenblickliche Verfügung über den Übertragungskanal erlangt hat, und wenigstens allen anderen Einheiten des Systems vom Haupttyp initiiert, wobei alle diese Einheiten gleichzeitig ausgewählt werden und wobei das dritte Steuersignal die Berücksichtigung einer besonderen Adresse unterbindet.

2. Verfahren nach Anspruch 1, dadurch gekennzeichnet, daß die Datenüberführung mit allgemeiner Verbreitung zwischen derjenigen Einheit ($U_i$) vom Haupttyp, welche die Verfügung über den Übertragungskanal (BDO) erlangt hat, und allen Einheiten des Systems, nämlich vom Haupttyp und/oder vom Untertyp, initiiert wird.

3. Verfahren nach Anspruch 1 oder 2, dadurch gekennzeichnet, daß die Adressierung wenigstens einer der Einheiten des Systems erfolgt, indem gemeinsam mit der Aussendung wenigstens eines der drei Steuersignale durch die Schnittstellenschaltungen, welche derjenigen Einheit ($U_i$) vom Haupttyp zugeordnet sind, die die augenblickliche Verfügung über den Übertragungskanal (BDO) erlangt hat, und seiner Übertragung über diesen Kanal ein Adressenwort ausgesendet wird, welches q Signale vom Binärtyp enthält, die einen ersten ("0") und einen zweiten ("1") Logikzustand annehmen können, und indem dieses Adressenwort durch die adressierte Einheit erkannt wird, worin q eine ganze Zahl ist und $2^q$ wenigstens gleich der Anzahl (n) von Einheiten ist, aus denen das System gebildet ist.

4. Verfahren nach Anspruch 3, dadurch gekennzeichnet, daß für $2^q$ größer als die Anzahl (n) von Einheiten, die an den Digitaldaten-Übertragungskanal angeschlossen sind, die andauernde Überwachung der über diesen Kanal übertragenen Adressenwörter durch eine der mit diesem Kanal verbundenen Einheiten durchgeführt wird und sie mit einer Tabelle von virtuellen Adressen verglichen werden, und daß bei einem positiven Vergleich die genannte Einheit eine reelle Adresse berechnet, die einer der weiteren Einheiten entspricht, welche an den Übertragungskanal angeschlossen sind, und die virtuelle Adresse durch die berechnete reelle Adresse ersetzt.

5. Verfahren nach Anspruch 4, dadurch gekennzeichnet, daß zur Durchführung der Adressensubstitution die der Adressenüberwachungseinheit zugeordneten Schnittstellenschaltungen bei einem positiven Vergleich ein Binärsignal (NSBAD) ausgeben, das über den Übertragungskanal zu der Haupteinheit ($U_i$) übertragen wird, welche die virtuelle Adresse ausgegeben hat, und das einen ersten ("0") sowie einen zweiten ("1") Logikzustand annehmen kann, wobei der erste Logikzustand die Aussendung der genannten virtuellen Adresse sperrt.

6. Verfahren nach einem der Ansprüche 3 bis 5, dadurch gekennzeichnet, daß die Übertragung von Digitaldaten und die von Adressensignalen über den Datenübertragungskanal wahlweise erfolgen kann in einer ersten Betriebsweise, bei der die Adressensignale gleichzeitig mit den Digitaldaten übertragen werden, und in einer zweiten Betriebsweise, bei welche die Aussendung der Daten nach der Aussendung der Adressensignale und ihrer Erkennung durch die adressierte Einheit erfolgt, und daß die Wahl einer dieser zwei Betriebsweisen ausgeführt wird, indem diejenige Haupteinheit, welche die augenblickliche Verfügung über den Übertragungskanal erlangt hat, zu den ihr zugeordneten Schnittstellenschaltungen ein binäres Steuersignal (NSIM) überträgt, welches einen ersten ("0") sowie einen zweiten ("1") Logikzustand annehmen kann, wobei jeder dieser Zustände einer der zwei Betriebsweisen zugeordnet ist.

7. Verfahren nach Anspruch 6, dadurch gekennzeichnet, daß die Haupteinheit, welche die Datenüberführung auf dem Übertragungskanal eingeleitet hat, gleichzeitig mit den Adressensignalen ein erstes weiteres binäres Steuersignal (NRWGB) aussendet, welches einen ersten ("0") sowie einen zweiten ("1") Logikzustand annehmen kann, von denen der erste einem Empfangsbefehl und der zweite einem Sendebefehl zum Aussenden von Daten durch die durch die genannte Haupteinheit adressierte Einheit zugeordnet ist, sowie über den Übertragungskanal übertragen wird.

8. Verfahren nach Anspruch 7, dadurch gekennzeichnet, daß die genannte Haupteinheit ein zweites weiteres Steuersignal (NDS-NDSM) binärer Art aussendet, welches einen ersten ("0") sowie einen zweiten ("1") Logikzustand annehmen kann, wobei der erste Logikzustand ("0") anzeigt, daß die übertragenen Daten gültig sind.

9. Verfahren nach einem der Ansprüche 6 bis 8, bei welchem die über den Übertragungskanal zu übertragenden Daten die Form von aufeinanderfolgenden Wörtern haben, die jeweils mehrere Binärsignale enthalten, wobei das Verfahren dadurch gekennzeichnet ist, daß die Datenüberführung wahlweise in einem einzigen Wort oder in einem Block aus mehreren Wörtern erfolgt, und daß die Haupteinheit, welche die Datenüberführung ausgelöst hat, gemeinsam mit der Aussendung dieser Daten ein drittes weiteres Steuersignal (NBLOC) binärer Art aussendet,

welches einen ersten ("0") und einen zweiten ("1") Logikzustand annehmen kann, wobei der erste Logikzustand ("0") eine Blockübertragung anzeigt.

10. Verfahren nach Anspruch 9, dadurch gekennzeichnet, daß die Überführung als Block von Datenwörtern erfolgt und das zweite weitere Steuersignal (NDS, NDSM) auf den ersten Logikzustand ("0") eingestellt wird, bevor jedes der den Block bildenen Wörter ausgesendet wird, und daß das von der Haupteinheit ausgegebene Adressenwort durch die adressierte Einheit am Beginn der Überführung gespeichert wird und bei jeder anschließenden Einstellung des zweiten weiteren Steuersignals (NDS, NDSM) in den ersten Logikzustand ("0") um eine Einheit erhöht wird.

11. Vorrichtung zur Durchführung des Verfahrens nach einem der Ansprüche 1 bis 10, dadurch gekennzeichnet, daß sie Schnittstellenschaltungen (I_{DI}—I_{Dn}) umfaßt, welche auf einer Seite mittels eines besonderen Verbindungskanals (BUS_1—BUS_n) jeweils mit einer der Einheiten (U_1—U_n) des genannten Systems (S) und auf ihrer zweiten Seite mit einem bidirektionalen Übertragungskanal (BDO) verbunden sind, und daß der Kanal wenigstens ein erstes Bündel von Leitern (CNT) für Mehrfachverbindungen umfaßt, deren Anzahl wenigstens gleich der Anzahl von binären Steuersignalen (NAS, NSERV, BCAST, NDS, NDSM, NBLOC) oder Sperrsignalen (NSBAD) ist, wobei jedes dieser Signale über eine getrennte Verbindung läuft; wobei ein zweites Bündel von Leitern (ADR) für Mehrfachverbindungen die Adressenwörter befördert und ein drittes Bündel von Leitern (DON) für Mehrfachverbindungen digitale Datenwörter befördert, die übertragen werden sollen.

12. Vorrichtung nach Anspruch 11, dadurch gekennzeichnet, daß die Anzahl von Leitern des dritten Bündels (DON), welches die zu übertragenden Datenwörter befördert, eine durch act teilbare Zahl ist, so daß Datenwörter befördert werden können, die aus Oktaden bestehen.

13. Vorrichtung nach Anspruch 11, dadurch gekennzeichnet, daß die Schnittstellenschaltungen (I_{DI}) an die Leiter der Bündel, welche den Übertragungskanal bilden, über Sende-Logikelemente mit Halbleiterübergängen vom Typ mit offenem Kollektor angekoppelt sind, so daß der erste Logikpegel ("0") gegenüber dem zweiten Logikpegel ("1") überwiegt.

14. Vorrichtung nach Anspruch 11, dadurch gekennzeichnet, daß jede der Schnittstellenschaltungen (I_{DI}) und die daran angekoppelte Einheit (U_i) einer Adresse zugeordnet sind und Mittel umfassen, welche einen dauernden Vergleich zwischen den über das zweite Leiterbündel (ADR) beförderten Adressenwörtern und dieser Adresse durchführen, um eine besondere Adresse zu erkennen und die Einheit zu aktivieren, wenn sie adressiert ist.

15. Vorrichtung nach Anspruch 14, dadurch gekennzeichnet, daß die der Einheit (U_i) zugeordnete Adresse durch Elemente mit verdrahteter Logik erzeugt wird.

16. Vorrichtung nach Anspruch 14, dadurch gekennzeichnet, daß die einer Haupteinheit (U_i) zugeordneten Schnittstellenschaltungen (I_{DI}) wenigstens einen ersten Modul (AMP 1) umfassen, der steuerbare Verstärkermittel enthält, welche auf einer ersten Seite an das genannte dritte Leiterbündel (DON) und auf der zweiten Seite über ein internes Bündel der Leiter (DON i) an die zugeordnete Einheit (U_i) angekoppelt sind, einen zweiten steuerbaren Modul (AMP 2) enthalten, der auf einer ersten Seite mit dem genannten zweiten Leiterbündel (ADR) und auf der zweiten Seite über ein internes Bündel von Leitern (ADR i) mit der zugeordneten Einheit (U_i) verbunden ist, sowie einen dritten Modul (COM) enthalten, welcher die genannten Adressen-Vergleichermittel enthält, die an wenigstens einen bestimmten Teil der Verbindungen des genannten zweiten Bündels (ADR) angeschlossen sind, und Kombinations- und Speicher-Logikmittel enthält, welche auf einer Seite die genannten Steuersignale und Sperrsignale empfangen und aussenden, welche über das erste Leiterbündel (CMT) befördert sind, und auf der anderen Seite über ein Leiterbündel angekoppelt sind, welches Steuersignale für die Schnittstellenschaltungen befördert, die durch die zugeordnete Einheit (U_i) erzeugt werden.

17. Vorrichtung nach Anspruch 16, dadurch gekennzeichnet, daß der dritte Modul zwei interne Steuersignale (NVINVA, NVINVD) für die Steuerung der selektiven Freigabe der Verstärkermittel (AMP 2) des zweiten Moduls bzw. (AMP 1) des ersten Moduls aussendet.

18. Vorrichtung nach Anspruch 16, dadurch gekennzeichnet, daß der dritte Modul ferner an eine Zuweisungsvorrichtung (I_{AI}, BAR) für die Zuweisung der augenblicklichen Verfügung über den Übertragungskanal (BOC) angekoppelt ist, welche die Funktion der Schnittstellenschaltungen (I_{DI}) freigibt, wenn die Verfügung über diesen Kanal der zugeordneten Einheit (U_i) zugewiesen wurde.

19. Vorrichtung nach Anspruch 14, dadurch gekennzeichnet, daß die Schnittstellenschaltungen (I_{Dx}), welche einer Untereinheit zugeordnet sind, versehen sind mit wenigstens einem ersten Modul (AMP 1), der Verstärker- und Speichermittel enthält, die auf einer ersten Seite an das genannte dritte Leiterbündel (DON) und auf der anderen Seite an ein internes Leiterbündel (DON i) angekoppelt sind, und mit einem zweiten Modul (COM), welche die genannten Adressen-Vergleichermittel sowie Kombinations- und Speicher-Logikmittel (REG) enthält, wobei diese Mittel an das zweite Leiterbündel (ADR) und an wenigstens einen bestimmten Teil der Verbindungen des ersten Leiterbündels (CNT) angeschlossen sind, wobei diese Verbindungen die Verbindung umfassen, auf der das zweite weitere Steuersignal (NDS) befördert wird; und daß die Speichermittel (REG) des zweiten Moduls (COM) das über das zweite Leiterbündel (ADR) beförderte Adressenwort speichern, wenn dieses zweite weitere Steuersignal (NDS) auf den ersten Logikzustand ("0") eingestellt wird; wobei die Speichermittel ferner einen Zähler enthalten, der das genannte gespeicherte Adressenwort bei jeder anschließenden Einstellung des Steuersignals (NDS) während einer Datenwort-Blockübertragung um eine Einheit erhöht.

20. Vorrichtung nach Anspruch 14, dadurch gekennzeichnet, daß wenigstens eine der Schnittstellenschaltungen ($I_{Dm}$), die mit dem Übertragungskanal (BDO) verbunden ist, einer Einheit ($U_m$) zugeordnet ist, welche Speichermittel ($M_m$) zum Speichern einer Liste von virtuellen Adressen sowie Rechenmittel ($P_m$) umfaßt, um aus einer dieser virtuellen Adressen eine reelle Adresse zu gewinnen, welche die Adresse einer der Einheiten ($U_j$) darstellt, die über Schnittstellenschaltungen ($I_{Dj}$) an den Übertragungskanal (BDO) angeschlossen ist, und daß die genannten Schnittstellenschaltungen ($I_{Dm}$) wenigstens Mittel zum dauernden Vergleichen der über das zweite Leiterbündel (ADR) beförderten Adressenwörter mit der genannten Liste von virtuellen Adressen, Mittel, um bei einem positiven Vergleich ein Signal (NSBAD) zur Sperrung des zuvor beförderten Adressenwortes auszusenden und es zu der sendenden Einheit ($U_i$) zu übertragen, sowie Mittel enthalten, um diese Adresse durch die reelle Adresse zu ersetzen, welche durch die genannten Rechenmittel ($P_m$) berechnet wurde.

## Claims

1. Method of transmission of digital data between the units ($U_1$—$U_n$) of a system (S) for the processing of these data through a single data transmission channel (BDO) of bus type having multiple connections whereto all of the units forming said system are connected through interface circuits ($I_{Di}$—$I_{Dn}$), said system comprising units of master type ($U_1$, $U_i$, $U_n$) susceptible to demand and obtain the instantaneous command over the transmission channel to address at least one further unit of the system and to initiate data exchanges on this channel, and units of slave type ($U_x$) susceptible to be addressed by a unit of master type, as well as an allocation device (DAR) for the allocation of the instantaneous command over said channel to one of the master units demanding the instantaneous command over this channel, this allocation device being connected to all of the units of master type; the method being characterized in that the transmission of data on said channel is selectively performed in accordance with three different addressing structures each of which excludes both of the other and is initiated by the transmission of at least one particular control signal of binary type on an elementary bus of said single data transmission channel, by the interface circuits ($I_{Di}$) associated with the master unit ($U_i$) having obtained the instantaneous command over the transmission channel, said particular control signal being susceptible to take first ("0") and second ("1") logic states and being transmitted through said single channel simultaneously to all of the other interface circuits and selected among the three following signals:

— a first control signal (NAS) set to the first logic state ("0") in presence of a stable destination address of slave type, and initiating a point by point data transfer between the master unit ($U_i$) having obtained the instantaneous command over the transmission channel and a unit ($U_x$) of slave type addressed by this master unit ($U_i$);

— a second control signal (NSERV) set to the first logic state ("0") in presence of a stable destination address of master type, and initiating a point by point data transfer between the master unit ($U_i$) having obtained the instantaneous command over the transmission channel and a second master unit ($U_j$) addressed by the first master unit ($U_i$);

— and a third control signal the setting of which into the second logic state ("1") concurrently with the setting of the first or second control signal (NAS, NSERV) into the same state initiates a general distribution data transfer between the unit ($U_i$) of master type having obtained the instantaneous command over the transmission channel and at least all the other units of master type of said system, all of these units being simultaneously selected, this third control signal inhibiting a particular address to be taken into account.

2. Method according to claim 1, characterized in that the general distribution data transfer is initiated between the master unit ($U_i$) having obtained the command over the transmission channel (BDO) and all of the units of said system, of master and/or slave type.

3. Method according to any of claims 1 and 2, characterized in that the addressing of at least one of the units of said system is performed by transmitting concurrently with at least one of the three control signals by the interface circuits associated with the master unit ($U_i$) having obtained the instantaneous command over the transmission channel (BDO) and its transmission on this channel, an address word comprising q binary signals susceptible to take first ("0") and second ("1") logic states, and by recognition of this address word in the addressed unit, wherein q is an integer and $2^q$ is at least equal to the number (n) of units forming said system.

4. Method according to claim 3, characterized in that, $2^q$ exceeding the number (n) of units connected to the digital data transmission channel, the address words transmitted on said channel are permanently monitored by one of the units connected to this channel and compared to a table of virtual addresses, and in that, in case of a positive comparison, said unit computes a real address corresponding to one of the other units connected to the transmission channel and substitutes the computed real address for the virtual address.

5. Method according to claim 4, characterized in that, in order to perform the address substitution, the interface circuits associated to the address monitoring unit transmit, upon a positive comparison, a binary signal (NSBAD) transmitted on the transmission channel to the master unit ($U_i$) having transmitted said virtual address and susceptible to take first ("0") and second ("1") logic states, the first logic state inhibiting the transmission of said virtual address.

6. Method according to any of claims 3 to 5, characterized in that the transmission of digital data and that of the address signals through the data transmission channel is susceptible to be performed selectively in a first mode wherein the address signals are transmitted simultaneously with the digital data, and a second mode wherein said data transmission is performed after the transmission of the address signals and their recognition in the addressed unit, and in that the selection of one of these two modes is performed by the transmission of a binary control signal (NSIM) from the master unit having obtained the instantaneous command over the transmission channel to the interface circuits associated therewith, said control signal being susceptible to take first ("0") and second ("1") logic states, each of these states being associated with one of the two modes.

7. Method according to claim 6, characterized in that the master unit having initiated the data transfer on the transmission channel transmits, concurrently with the address signals, a first further control signal (NRWGB) of binary type susceptible to take first ("0") and second ("1") logic states and respectively associated with a reception control and a control for the transmission of data by the unit addressed by said master unit, and transmitted on the transmission channel.

8. Method according to claim 7, characterized in that said master unit transmits a second further control signal (NDS-NDSM) of binary type and susceptible to take first ("0") and second ("1") logic states, the first logic state ("0") indicating that the transmitted data are valid.

9. Method according to any of claims 6 to 8, wherein the data to be transmitted on the transmission channel present themselves as successive words each comprising a plurality of binary signals, the method being characterized in that the transfer of data can be performed selectively in single words or in a block of a plurality of words, and in that the unit of master type having initiated the data transfer transmits, concurrently with the transmission of these data, a third further control signal (NBLOC) of binary type susceptible to take first ("0") and second ("1") logic states, the first logic estate ("0") indicating a block transmission.

10. Method according to claim 9, characterized in that the transfer being performed in blocks of data words, the second further control signal (NDS, NDSM) is set to the first logic state ("0") prior to the transmission of each of the words forming the block, and in that the address word transmitted by the master unit is stored by the addressed unit at the beginning of the transfer and incremented by one unit upon each of the subsequent settings of said further control signal (NDS, NDSM) to the first logic state ("0").

11. Device for performing the method of any of claims 1 to 10, characterized in that it comprises interface circuits ($I_{DI}$—$I_{Dn}$) connected on a first face and by means of one particular connection channel ($BUS_1$—$BUS_n$) each to one of the units ($U_1$—$U_n$) of said system (S), and on the second face to a bidirectional transmission channel (BDO), and in that the channel comprises at least a first bundle of conductors (CNT) for multiple connections the number of which is at least equal to the number of binary control signals (NAS, NSERV, BCAST, NDS, NDSM, NBLOC) or inhibition signals (NSBAD), each of the signals being transmitted by a distinct connection; a second bundle of conductors (ADR) for multiple connections and carrying the address words, and a third bundle of conductors (DON) for multiple connections and carrying the digital data words to be transmitted.

12. Device according to claim 11, characterized in that the number of conductors of the third bundle (DON) carrying the data words to be transmitted is a number dividable by eight so as to transmit data words composed of octets.

13. Device according to claim 11, characterized in that the interface circuits ($I_{Di}$) are coupled to the conductors of the bundles forming the transmission channel through logic transmitter members having semiconductor junctions and of open collector type, in a manner to make the first logic state ("0") predominant over the second logic level ("1").

14. Device according to claim 11, characterized in that each of the interface circuits ($I_{Di}$) and the unit ($U_i$) coupled thereto are associated with one address and comprise means performing a permanent comparison between the address words transmitted through the second bundle of conductors (ADR) and this address, in a manner to recognize a particular address and to activate the unit when it is addressed.

15. Device according to claim 14, characterized in that the address associated with the unit ($U_i$) is generated by wired logic elements.

16. Device according to claim 14, characterized in that the interface circuits ($I_{Di}$) associated with a unit ($U_i$) of master type comprise at least a first module (AMP 1) comprising controllable amplification means coupled to said third bundle of conductors (DON) on the first face and through an internal bundle (DON i) to the associated unit ($U_i$) on the second face, a second controllable module (AMP 2) coupled to said second bundle of conductors (ADR) on the first face and through an internal bundle of conductors (ADR i) to the associated unit ($U_i$) on the second face, and a third module (COM) comprising said address comparing means and connected to at least one determined portion of the connections of said second bundle (ADR), and logic combination and storing means receiving and transmitting on one of its faces said control and inhibition signals carried by the first bundle of conductors (CMT), and connected on its other face through a bundle of conductors carrying the control signals of the interface circuits generated by the associated unit ($U_i$).

17. Device according to claim 16, characterized in that the third module transmits two internal control signals (NVINVA, NVINVD) for controlling the selective enabling of the amplification means of the second (AMP 2) and first (AMP 1) modules, respectively.

18. Device according to claim 16, characterized in that the third module is further coupled to a device ($I_{Ai}$, BAR) for the allocation of the instantaneous command over the transmission channel (BDO) authorizing the operation of the interface circuits ($I_{Di}$) when the command over this channel has been passed to the associated unit ($U_i$).

19. Device according to claim 14, characterized in that the interface circuits ($I_{Dx}$) associated with a unit of slave type comprise at least a first module (AMP 1) comprising amplification and storing means coupled to said third bundle of conductors (DON) on the first face and to an internal bundle of conductors (DON i) on the second face; and a second module (COM) comprising said address comparing means as well as logic combination and storing means (REG), these means being connected to said second bundle of conductors (ADR) and to at least a determined portion of the connections of said first bundle of conductors (CNT), these connections comprising the connection carrying the second further control signal (NDS); and in that the storing means (REG) of the second module (COM) store the address word transmitted through the second bundle of conductors (ADR) upon the setting of this second further control signal (NDS) to the first logic state ("0"); the storing means further comprising a counter incrementing said stored address word by one unit at each subsequent setting of the control signal (NDS) upon a data word block transfer.

20. Device according to claim 14, characterized in that at least one of the interface circuits ($I_{Dm}$) connected to the transmission channel (BDO) is associated with a unit ($U_m$) comprising means ($M_m$) for storing a list of virtual addresses and computing means ($P_m$) for generating, from one of these virtual addresses, a real address representing the address of one of the units ($U_j$) connected to the transmission channel (BDO) through interface circuits ($I_{Dj}$), and in that said interface circuits ($I_{Dm}$) comprise at least means for permanently comparing the address words transmitted through the second bundle of conductors (ADR) to the list of virtual adresses, means for transmitting, upon a positive comparison, an inhibition signal (NSBAD) of the previously transferred address word and transmitting the same to the transmitting unit ($U_i$) and means for substituting for this address the real address computed by said computing means ($P_m$).

# FIG.1

# FIG.2

SIGNAUX ADRESSES — B CAST — ADR

SIGNAUX DONNEES — DON

SIGNAUX DE SERVICE — SPE

SIGNAUX DE GESTION DES TRANSFERTS — CNT

# FIG.3

Vers $I_{Ai}$

$B_{Ai}$

NCOUR
NDEMAN
PERSO

BAR

PRIO

NACT

# FIG.4

C

DMB

TIMEOUT

LIBR

NSYNMEM

ACTIF

de/vers
Ui

$I_{Ai}$

PRIO

PERSO

NCOUR

BAR

NDEMA

NACT

2Hi    NSTA

de Ui

2

# FIG.5

# FIG.6

# FIG.7

UNITE EMETTRICE                    UNITE ADRESSEE

$U_i$                              $U_j$

$I_{Di}$                           $I_{Di}$

ADRESSE PHYSIQUE

BUS$_i$

ADR                               ADRESSE VIRTUELLE

DON

BDO

CNT

BUS$_m$

NSBAD

$I_{Dm}$

$U_m$

PROCESSEUR      TABLES
                D'ADRESSES

$P_m$           $M_m$

UNITE DE SUBSTITUTION D'ADRESSES

5

# FIG. 8

NCOUR — 1 / 0 — Tmin — t

a b c — AFFICHAGE N° PROCESSEUR VAINQUEUR — b

AFFICHAGE NIVEAU PRIORITE DES PROCESSEURS DEMANDEURS

NDEMA — 1 / 0 — t

PERSO — 1 / 0 — t

# FIG. 9

tmin

ACTIF — 1 / 0 — t

DMB — 1 / 0 — t

NSYNMEM — 1 / 0 — t

T

A    B    C

6

# FIG.10

```
                              ( DEBUT )
                                  │
                                  ▼
              NON          ┌──────────┐          OUI
        ┌────────────────◦<   DmB= 1   >────────────────┐
        │                 └──────────┘                  │
        │                      └180                      │
        ▼                                                ▼
   ┌─────────┐    184                          181   ┌─────────┐    OUI
NON<  LIBR= 1  >                                  └─<  ACTIF= 1  >──────┐
 └─<         >                                       └─────────┘         │
    └─────────┘                                           │ NON          │
        │ OUI          OUI                           182  ▼              │
        │      ◦───────────┐                      ┌─────────┐    NON     │
        ▼                  │                    └─<  PERSO= 1  >◦────────┤
   ┌─────────┐   185       │                       └─────────┘         │
NON<  ACTIF= 1  >◦          │                           │ .OUI          │
 └─<          >            │                      183  ▼              │
    └─────────┘            │                    ┌─────────┐            │
        │ OUI   186        │                    <  NCOUR= 0  >─────────┤
        ▼                  │                     └─────────┘            │
   ┌─────────┐   OUI       │                         │ NON             │
   <  NVAIN= 0  >◦─────────┘                          │                 │
    └─────────┘                                       │                 │
        │ NON                                         │                 │
        └──────────────────────┬──────────────────────┘                 │
                               ▼                                        │
                    ┌──────────────────┐                                │
                    │  DECLENCHEMENT   │  187                           │
                    │  DE LA COURSE    │                                │
                    │  SUR LE PREMIER  │                                │
                    │  FRONT DE 2Hi    │                                │
                    └──────────────────┘                                │
                               │                                        │
                               ▼                                        │
                    ┌──────────────────┐  188                           │
                    │  ATTENTE UNE     │                                │
                    │  PERIODE         │                                │
                    └──────────────────┘                                │
                               │                                        │
               ┌───────────────┤                                        │
               │               ▼                                        │
           OUI │        ┌──────────┐  189                               │
               └───────◦<  NSYNMEM   >                                   │
                        <   = 0      >                                   │
                         └──────────┘                                    │
                               │ NON                                     │
                               ▼                                         │
                    ┌──────────────────┐  190                           │
                    │  REMONTEE        │                                │
                    │  DE NCOUR        │                                │
                    └──────────────────┘                                │
                               │                                        │
                               ▼                                        │
                            ( FIN )
```

# FIG.11

NSYNMEM

NVAD

NVINVA

NAS

NVDO

NVINVD

NDS

NMRDY

DTACK

ADRESSE

DONNEE
ECRITURE

DONNEE
LECTURE

# FIG.12

NSYNMEM

NVAD

NVINVA

NAS

NVDO

NVINVD

NDS

NMRDY

DTACK

ADRESSE

DONNEE
ECRITURE

DONNEE
LECTURE

NBLOC

# FIG.13

NSYNMEM

NVAD

NAQAD

NVINVA

NAS

NVDO

NVINVD

NDS

NMRDY

DTACK

ADRESSE

DONNEE ECRITURE

DONNEE LECTURE

# FIG.14

NSYNMEM

NVAD

NAQAD

NVINVA

NAS

NVDO

NVINVD

NDS

NMRDY

DTACK

ADRESSE

DONNEE ECRITURE

DONNEE LECTURE

NBLOC

**0 063 071**

# FIG. 15

NSYNMEM

NVAD

NVINVA

NAS

NVDO

NSBAD

NVINVD

NDS

NMRDY

DTACK

ADRESSE

DONNEE ECRITURE

DONNEE LECTURE

ADRESSE VIRTUELLE

ADRESSE REELLE

ADRESSE SUBSTITUEE

# FIG.16

|                |          |
|----------------|----------|
| FIG.16 A       |          |
| FIG.16 B       | FIG.16 C |

# FIG.16A

DEBUT

ACTIF=1 — OUI

NON

NVAD=0 — NON

OUI

1 { NAS= 0
{ NSYNMEN =0
2_LANCER T

0 063 071

FIG.16B

ERREUR

1 { NAS=1
NDS=1
NSYNMEM=1
2 -LANCER PROCEDURE D'ERREUR

14

FIG.16C